(19) Europäisches Patentamt

European Patent Office

Office européen des brevets

(11) **EP 4 564 970 A1**

(12) **EUROPEAN PATENT APPLICATION**
published in accordance with Art. 153(4) EPC

(43) Date of publication:
04.06.2025 Bulletin 2025/23

(21) Application number: 23852015.9

(22) Date of filing: 11.08.2023

(51) International Patent Classification (IPC):
*H04W 72/04* (2023.01) *H04L 5/00* (2006.01)

(52) Cooperative Patent Classification (CPC):
H04L 5/00; H04W 72/04

(86) International application number:
PCT/CN2023/112726

(87) International publication number:
WO 2024/032795 (15.02.2024 Gazette 2024/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 12.08.2022 CN 202210972012

(71) Applicant: Huawei Technologies Co., Ltd.
Shenzhen, Guangdong 518129 (CN)

(72) Inventors:
• PENG, Zhongchong
  Shenzhen, Guangdong 518129 (CN)
• YAN, Mao
  Shenzhen, Guangdong 518129 (CN)
• SONG, Xinghua
  Shenzhen, Guangdong 518129 (CN)

(74) Representative: Epping - Hermann - Fischer
Patentanwaltsgesellschaft mbH
Schloßschmidstraße 5
80639 München (DE)

(54) **RELAY COMMUNICATION METHOD, RELAY COMMUNICATION SYSTEM, AND RELAY COMMUNICATION APPARATUS**

(57) A relay communication method, a communication system, and a communication apparatus are provided, and are applied to the field of communication technologies. In the relay communication method provided in this application, a first forwarding resource set may be configured for a relay device by using first signaling. The first forwarding resource set includes at least one forwarding resource. In addition, the first forwarding resource set in the relay device may be activated by using second signaling. In addition, a beam of the at least one forwarding resource may be further determined by using the second signaling, where the beam of the at least one forwarding resource may be used for forwarding a signal corresponding to the at least one forwarding resource, and the beam of the at least one forwarding resource includes a relay device backhaul side beam and/or a relay device access side beam. Based on this, in a relay communication scenario, the relay device may also forward a signal between a network device and a terminal device, so that beam management in the relay communication scenario can be implemented.

| Network device | Relay device |
|---|---|
| 701: First signaling, used for configuring a first forwarding resource set | |
| 702: Second signaling, used for activating the first forwarding resource set and | |
| determining a beam of at least one forwarding resource | |

FIG. 7

EP 4 564 970 A1

**Description**

This application claims priority to Chinese Patent Application No. 202210972012.5, filed with the China National Intellectual Property Administration on August 12, 2022 and entitled "RELAY COMMUNICATION METHOD, COMMUNICATION SYSTEM, AND COMMUNICATION APPARATUS", which is incorporated herein by reference in its entirety.

**TECHNICAL FIELD**

This application relates to the field of wireless communication technologies, and in particular, to a relay communication method, a communication system, and a communication apparatus.

**BACKGROUND**

In new radio (new radio, NR), beam management may be performed based on a reference signal (reference signal, RS). A base station may separately send RSs to user equipment (user equipment, UE) by using a plurality of different beams, and the UE may perform signal measurement on the RSs from the plurality of different beams, to determine a better communication beam between the base station and the UE.

The RS may be transmitted in a semi-persistent (semi-persistent, SP) manner, and the reference signal may be referred to as a semi-persistent reference signal (semi-persistent reference signal, SP-RS). When beam management is performed based on the SP-RS, the base station may configure an SP-RS resource to be associated with a beam, so that the SP-RS signal can be transmitted by using the beam.

Currently, in some scenarios, for example, in a scenario in which UE and a base station communicate with each other via a relay device, beam management between the base station and the UE needs to be implemented by using the relay device. However, in the relay communication scenario, there is no related solution in conventional technologies for how to configure and activate an SP-RS resource to perform beam management.

**SUMMARY**

This application provides a relay communication method, a communication system, and a communication apparatus, to implement beam management in a relay communication scenario.

To achieve the foregoing objective, this application uses the following technical solutions.

According to a first aspect, a relay communication method is provided. The method may include: A relay device receives first signaling, where the first signaling is used for configuring a first forwarding resource set, and the first forwarding resource set includes at least one forwarding resource; and the relay device receives second signaling, where the second signaling is used for activating or deactivating the first forwarding resource set and determining a beam of the at least one forwarding resource, where the beam of the at least one forwarding resource is used for forwarding a signal corresponding to the at least one forwarding resource, and the beam of the at least one forwarding resource includes a relay device backhaul side beam and/or a relay device access side beam.

With reference to the first aspect, in a possible implementation, the first signaling is RRC signaling, and the second signaling is a MAC-CE or DCI.

With reference to the first aspect, in a possible implementation, the relay device backhaul side beam of the at least one forwarding resource is used by the relay device to receive, from a network device, the signal corresponding to the at least one forwarding resource, and the relay device access side beam of the at least one forwarding resource is used by the relay device to forward, to a terminal device, the signal corresponding to the at least one forwarding resource; or the relay device backhaul side beam of the at least one forwarding resource is used by the relay device to forward, to the network device, the signal corresponding to the at least one forwarding resource; and the relay device access side beam of the at least one forwarding resource is used by the relay device to receive, from the terminal device, the signal corresponding to the at least one forwarding resource.

With reference to the first aspect, in a possible implementation, the first signaling includes at least one of the following: an index of the forwarding resource set, an index of a forwarding resource in the forwarding resource set, time-frequency location information, density information, network device beam information, relay device access side beam information, or relay device backhaul side beam information.

With reference to the first aspect, in a possible implementation, the time-frequency location information may include at least one of the following: a periodicity, a time offset in the periodicity, time information, and frequency information.

With reference to the first aspect, in a possible implementation, the time offset in the periodicity may be an offset at a granularity of a symbol.

With reference to the first aspect, in a possible implementation, the time information may include duration in a symbol unit, a start position of the symbol, an end position of the symbol, and the like.

With reference to the first aspect, in a possible implementation, the network device beam information may include QCL information of the network device beam, the relay device access side beam information may include QCL information of the relay device access side beam, and the relay device backhaul side beam information may include QCL information of the relay device backhaul side beam.

With reference to the first aspect, in a possible implementation, the beam of the at least one forwarding resource further includes a network device beam, and the first signaling further includes the network device beam information.

With reference to the first aspect, in a possible implementation, when the beam of the at least one forwarding resource includes the relay device access side beam, the second signaling includes a plurality of first indication fields; and an $i^{th}$ first indication field in the plurality of first indication fields indicates a relay device access side beam of an $i^{th}$ forwarding resource in the first forwarding resource set, where i is a positive integer.

With reference to the first aspect, in a possible implementation, the $i^{th}$ first indication field is used for carrying an index of the relay device access side beam of the $i^{th}$ forwarding resource; and the second signaling further includes a first type field corresponding to the $i^{th}$ first indication field, and the first type field indicates that a type of the index carried in the first indication field is a relay device access side beam index.

With reference to the first aspect, in a possible implementation, when the beam of the at least one forwarding resource includes the relay device backhaul side beam, the second signaling further includes a second indication field corresponding to X first indication fields; the X first indication fields indicate relay device access side beams of X forwarding resources, the second indication field indicates relay device backhaul side beams of the X forwarding resources, and the relay device backhaul side beams of the X forwarding resources are the same.

With reference to the first aspect, in a possible implementation, the second indication field is used for carrying indexes of the relay device backhaul side beams of the X forwarding resources; and the second signaling further includes a second type field corresponding to the second indication field, and the second type field indicates that a type of the index carried in the second indication field is a relay device backhaul side beam index.

With reference to the first aspect, in a possible implementation, when the beam of the at least one forwarding resource includes the relay device backhaul side beam, the second signaling further includes a second indication field corresponding to at least one first indication field; and the at least one first indication field indicates a relay device access side beam of the at least one forwarding resource, the second indication field may indicate a first relay device backhaul side beam, and the first backhaul side beam is the relay device backhaul side beam of the at least one forwarding resource indicated by the first indication field.

With reference to the first aspect, in a possible implementation, when the beam of the at least one forwarding resource includes the network device beam, the second signaling further includes a third indication field corresponding to Y first indication fields, the Y first indication fields indicate relay device access side beams of Y forwarding resources, the third indication field indicates network device beams of the Y forwarding resources, and the network device beams of the Y forwarding resources are the same.

With reference to the first aspect, in a possible implementation, the third indication field is used for carrying indexes of the network device beams of the Y forwarding resources; and the second signaling further includes a third type field corresponding to the third indication field, and the third type field indicates that a type of the index carried in the third indication field is a network device beam index.

With reference to the first aspect, in a possible implementation, when the beam of the at least one forwarding resource includes the relay device backhaul side beam, the third signaling further includes a third indication field corresponding to at least one first indication field; and the at least one first indication field indicates a relay device access side beam of the at least one forwarding resource, the third indication field may indicate a first network device beam, and the first network device beam is the network device beam of the at least one forwarding resource indicated by the first indication field.

With reference to the first aspect, in a possible implementation, before that the relay device receives the second signaling, the method further includes: The relay device receives third signaling, where the third signaling includes at least one index set, the index set includes at least one beam index, and the beam index is the index of the relay device access side beam.

With reference to the first aspect, in a possible implementation, the second signaling includes a seventh indication field, and the seventh indication field corresponds to a first index set in the at least one index set; and the seventh indication field further includes at least one piece of bit information, and the at least one piece of bit information is used for activating a relay device access side beam corresponding to the first index set.

With reference to the first aspect, in a possible implementation, if $k^{th}$ piece of bit information in the at least one piece of bit information is a first value, a relay device access side beam corresponding to a $k^{th}$ beam index in the first index set is activated.

With reference to the first aspect, in a possible implementation, the relay device access side beam activated by using the second signaling sequentially corresponds to the resource in the first forwarding resource set.

With reference to the first aspect, in a possible implementation, the first signaling is further used for configuring a first transmission resource set, and the first transmission resource set includes at least one transmission resource; the second signaling is further used for activating the first transmission resource set and determining a network device beam of the transmission resource in the first transmission resource set; and the first transmission resource set is used for signal transmission between the network device and the relay device; and the network device beam of the transmission resource and the network device beam of the forwarding resource are the same, or the network device beam of the transmission resource and the network device beam of the forwarding resource are different.

According to a second aspect, a relay communication method is provided. The method may include: A network device sends first signaling, where the first signaling is used for configuring a first forwarding resource set, and the first forwarding resource set includes at least one forwarding resource; and the network device sends second signaling, where the second signaling is used for activating or deactivating the first forwarding resource set and determining a beam of the at least one forwarding resource, where the beam of the at least one forwarding resource is used for forwarding a signal corresponding to the at least one forwarding resource, and the beam of the at least one forwarding resource includes a relay device backhaul side beam and/or a relay device access side beam.

With reference to the second aspect, in a possible implementation, the first signaling is RRC signaling, and the second signaling is a MAC-CE or DCI.

With reference to the second aspect, in a possible implementation, the relay device backhaul side beam of the at least one forwarding resource is used by the relay device to receive, from the network device, the signal corresponding to the at least one forwarding resource, and the relay device access side beam of the at least one forwarding resource is used by the relay device to forward, to a terminal device, the signal corresponding to the at least one forwarding resource; or the relay device backhaul side beam of the at least one forwarding resource is used by the relay device to forward, to the network device, the signal corresponding to the at least one forwarding resource; and the relay device access side beam of the at least one forwarding resource is used by the relay device to receive, from the terminal device, the signal corresponding to the at least one forwarding resource.

With reference to the second aspect, in a possible implementation, the first signaling includes at least one of the following: an index of the forwarding resource set, an index of a forwarding resource in the forwarding resource set, time-frequency location information, density information, network device beam information, relay device access side beam information, or relay device backhaul side beam information.

With reference to the second aspect, in a possible implementation, the time-frequency location information may include at least one of the following: a periodicity, a time offset in the periodicity, time information, and frequency information.

With reference to the second aspect, in a possible implementation, the time offset in the periodicity may be an offset at a granularity of a symbol.

With reference to the second aspect, in a possible implementation, the time information may include duration in a symbol unit, a start position of the symbol, an end position of the symbol, and the like.

With reference to the second aspect, in a possible implementation, the network device beam information may include QCL information of the network device beam, the relay device access side beam information may include QCL information of the relay device access side beam, and the relay device backhaul side beam information may include QCL information of the relay device backhaul side beam.

With reference to the second aspect, in a possible implementation, the beam of the at least one forwarding resource further includes a network device beam, and the first signaling further includes the network device beam information.

With reference to the second aspect, in a possible implementation, when the beam of the at least one forwarding resource includes the relay device access side beam, the second signaling includes a plurality of first indication fields; and an $i^{th}$ first indication field in the plurality of first indication fields indicates a relay device access side beam of an $i^{th}$ forwarding resource in the first forwarding resource set, where i is a positive integer.

With reference to the second aspect, in a possible implementation, the $i^{th}$ first indication field is used for carrying an index of the relay device access side beam of the $i^{th}$ forwarding resource; and the second signaling further includes a first type field corresponding to the $i^{th}$ first indication field, and the first type field indicates that a type of the index carried in the first indication field is a relay device access side beam index.

With reference to the second aspect, in a possible implementation, when the beam of the at least one forwarding resource includes the relay device backhaul side beam, the second signaling further includes a second indication field corresponding to X first indication fields; the X first indication fields indicate relay device access side beams of X forwarding resources, the second indication field indicates relay device backhaul side beams of the X forwarding resources, and the relay device backhaul side beams of the X forwarding resources are the same.

With reference to the second aspect, in a possible implementation, the second indication field is used for carrying indexes of the relay device backhaul side beams of the X forwarding resources; and the second signaling further includes a second type field corresponding to the second indication field, and the second type field indicates that a type of the index carried in the second indication field is a relay device backhaul side beam index.

With reference to the second aspect, in a possible implementation, when the beam of the at least one forwarding resource includes the relay device backhaul side beam, the second signaling further includes a second indication field corresponding to at least one first indication field; and the at least one first indication field indicates a relay device access side beam of the at least one forwarding resource, the second indication field may indicate a first relay device backhaul side beam, and the first backhaul side beam is the relay device backhaul side beam of the at least one forwarding resource indicated by the first indication field.

With reference to the second aspect, in a possible implementation, when the beam of the at least one forwarding resource includes the network device beam, the second signaling further includes a third indication field corresponding to Y first indication fields, the Y first indication fields indicate relay device access side beams of Y forwarding resources, the third indication field indicates network device beams of the Y forwarding resources, and the network device beams of the Y forwarding resources are the same.

With reference to the second aspect, in a possible implementation, the third indication field is used for carrying indexes of the network device beams of the Y forwarding resources; and the second signaling further includes a third type field corresponding to the third indication field, and the third type field indicates that a type of the index carried in the third indication field is a network device beam index.

With reference to the second aspect, in a possible implementation, when the beam of the at least one forwarding resource includes the relay device backhaul side beam, the third signaling further includes a third indication field corresponding to at least one first indication field; and the at least one first indication field indicates a relay device access side beam of the at least one forwarding resource, the third indication field may indicate a first network device beam, and the first network device is the network device beam of the at least one forwarding resource indicated by the first indication field.

With reference to the second aspect, in a possible implementation, before that the network device sends the second signaling, the method further includes: The network device sends third signaling, where the third signaling includes at least one index set, the index set includes at least one beam index, and the beam index is the index of the relay device access side beam.

With reference to the second aspect, in a possible implementation, the second signaling includes a seventh indication field, and the seventh indication field corresponds to a first index set in the at least one index set; and the seventh indication field further includes at least one piece of bit information, and the at least one piece of bit information is used for activating a relay device access side beam corresponding to the first index set.

With reference to the second aspect, in a possible implementation, if $k^{th}$ piece of bit information in the at least one piece of bit information is a first value, a relay device access side beam corresponding to a $k^{th}$ beam index in the first index set is activated.

With reference to the second aspect, in a possible implementation, the relay device access side beam activated by using the second signaling sequentially corresponds to the resource in the first forwarding resource set.

With reference to the second aspect, in a possible implementation, the first signaling is further used for configuring a first transmission resource set, and the first transmission resource set includes at least one transmission resource; the second signaling is further used for activating the first transmission resource set and determining a network device beam of the transmission resource in the first transmission resource set; and the first transmission resource set is used for signal transmission between the network device and the relay device; and the network device beam of the transmission resource and the network device beam of the forwarding resource are the same, or the network device beam of the transmission resource and the network device beam of the forwarding resource are different.

According to a third aspect, this application provides a communication apparatus, to implement the foregoing method. The communication apparatus may include a corresponding module, unit, or means (means) for implementing the foregoing method. The module, unit, or means may be implemented by hardware, or may be implemented by software, or may be implemented by hardware executing corresponding software. The hardware or the software includes one or more modules or units corresponding to the foregoing functions.

In a possible implementation, the communication apparatus includes a processing module and a transceiver module. The processing module is configured to invoke instructions to perform a message processing or control operation performed by the communication apparatus side in the method in the first aspect or the second aspect. The transceiver module is configured to perform a message receiving and sending operation performed by the communication apparatus side in the method in the first aspect or the second aspect.

According to a fourth aspect, a communication apparatus is provided, including a processor. The processor is configured to: be coupled to a memory, read computer instructions stored in the memory, and then perform the method in the first aspect or the second aspect based on the instructions.

In a possible implementation, the communication apparatus further includes the memory, and the memory is configured to store the computer instructions.

In a possible implementation, the communication apparatus further includes a communication interface, and the communication interface is used for communication between the communication apparatus and another device. For example, the communication interface may be a transceiver, an input/output interface, an interface circuit, an output circuit, an input circuit, a pin, a related circuit, or the like.

In a possible implementation, the communication apparatus may be a chip or a chip system. When the communication apparatus is a chip system, the communication apparatus may include a chip, or may include a chip and another discrete device.

In a possible implementation, when the communication apparatus is a chip or a chip system, the communication interface may be an input/output interface, an interface circuit, an output circuit, an input circuit, a pin, a related circuit, or the like of the chip or the chip system. The processor may alternatively be implemented as a processing circuit or a logic circuit.

According to a fifth aspect, a computer-readable storage medium is provided. The computer-readable storage medium stores instructions. When the instructions are run on a computer, the computer is enabled to perform the method in the first aspect or the second aspect.

According to a sixth aspect, a computer program product including instructions is provided. When the computer program product is run on a computer, the computer is enabled to perform the method in the first aspect or the second aspect.

## BRIEF DESCRIPTION OF DRAWINGS

FIG. 1 is a diagram of a beam coverage range according to an embodiment of this application;
FIG. 2 is a diagram of another beam coverage range according to an embodiment of this application;
FIG. 3 is a diagram of a communication system according to an embodiment of this application;
FIG. 4 is a diagram of a communication system according to an embodiment of this application;
FIG. 5 is a diagram of a structure of a communication apparatus according to an embodiment of this application;
FIG. 6 is a diagram of a structure of a relay device according to an embodiment of this application;
FIG. 7 is a flowchart of a relay communication method according to an embodiment of this application;
FIG. 8 is a diagram of second signaling according to an embodiment of this application;
FIG. 9 is a diagram of another piece of second signaling according to an embodiment of this application;
FIG. 10 is a diagram of another piece of second signaling according to an embodiment of this application;
FIG. 11 is a diagram of another piece of second signaling according to an embodiment of this application;
FIG. 12 is a diagram of another piece of second signaling according to an embodiment of this application;
FIG. 13 is a diagram of another piece of second signaling according to an embodiment of this application;
FIG. 14a is a diagram of another piece of second signaling according to an embodiment of this application;
FIG. 14b is a diagram of another piece of second signaling according to an embodiment of this application;
FIG. 15 is a diagram of another piece of second signaling according to an embodiment of this application;
FIG. 16a is a diagram of another piece of second signaling according to an embodiment of this application;
FIG. 16b is a diagram of another piece of second signaling according to an embodiment of this application;
FIG. 17 is a diagram of another piece of second signaling according to an embodiment of this application;
FIG. 18 is a diagram of another piece of second signaling according to an embodiment of this application;
FIG. 19 is a diagram of another piece of second signaling according to an embodiment of this application;
FIG. 20 is a diagram of another piece of second signaling according to an embodiment of this application;
FIG. 21 is a diagram of a structure of another communication apparatus according to an embodiment of this application; and
FIG. 22 is a diagram of a structure of another communication apparatus according to an embodiment of this application.

## DESCRIPTION OF EMBODIMENTS

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used to distinguish between same objects or similar objects whose functions and purposes are basically the same. A person skilled in the art may understand that the terms such as "first" and "second" do not limit a quantity or an execution sequence, and the terms such as "first" and "second" do not indicate a definite difference. In addition, terms such as "example" or "for example" in embodiments of this application are used to represent giving an example, an illustration, or descriptions. Any embodiment or design scheme described as an "example" or "for example" in embodiments of this application should not be explained as being more preferred or having more advantages than another embodiment or design scheme. Exactly, the terms such as "example" and "for example" used herein are intended to present a related concept in a specific manner for ease of understanding.

Before embodiments of this application are described, some terms and related technologies in embodiments of this application are explained and described. It should be noted that the following explanations and descriptions are intended to facilitate understanding of embodiments of this application, and should not be construed as any limitation on the protection scope claimed in embodiments of this application.

1. Reference signal and reference signal resource

The reference signal may also be referred to as a "pilot" signal, and is a known signal that is sent by a transmit end to a receive end for channel estimation or channel sounding. According to function division, the reference signal may include a demodulation reference signal (demodulation reference signal, DMRS), a channel state information reference signal (channel state information reference signal, CSI-RS), a phase tracking reference signal (phase tracking reference signal, PTRS), a channel sounding reference signal (sounding reference signal, SRS), and the like. The reference signal is generally used for channel estimation, auxiliary signal demodulation, detection, and the like. For example, the DMRS and the CSI-RS may be used to obtain channel information, and the PTRS may be used to obtain phase variation information.

The reference signal resource may be used for configuring relay communication attributes, for example, a time-frequency resource position, a port mapping relationship, a power factor, and a scrambling code. For details, refer to a conventional technology. A transmit-end device may send the reference signal based on the reference signal resource, and a receive end device may receive the reference signal based on the reference signal resource.

It should be understood that sending the reference signal based on the reference signal resource may also be referred to as sending the reference signal resource. In this technical field, sending the reference signal based on the reference signal resource and sending the reference signal resource are interchangeable.

The reference signal resource may have the following time domain characteristics: periodic, aperiodic, and semi-persistent. A periodic resource is configured with a periodicity and an offset, and the periodic resource takes effect periodically. The transmit end may periodically send a reference signal based on the periodic resource. The reference signal may be referred to as a periodic reference signal (periodic reference signal, P-RS). An aperiodic resource needs to be activated by using signaling before being used each time, and takes effect only once after being activated. When the aperiodic resource is activated, the transmit end may send a reference signal by using the aperiodic resource. The reference signal may be referred to as an aperiodic reference signal (aperiodic reference signal, AP-RS). A semi-persistent resource is also configured with a periodicity and an offset. However, the semi-persistent resource takes effect periodically only in an activated state, and does not take effect in an inactive state. After the semi-persistent resource is activated, the transmit end may periodically send a reference signal by using the resource, and after the semi-persistent resource is deactivated, the transmit end may stop sending the reference signal. The reference signal may be referred to as a semi-persistent reference signal (semi-persistent reference signal, SP-RS).

The reference signal resource is generally configured in a reference signal resource set, and one reference signal resource set may include a plurality of reference signal resources. To distinguish between different reference signal resources, each reference signal resource may correspond to an index (index) or an identity (identity, ID) of one reference signal resource. To distinguish between different reference signal resource sets, each reference signal resource set may also correspond to an index or an identifier of one reference signal resource set.

2. Beam (beam)

The beam is a communication resource. The beam may be a wide beam, a narrow beam, or another type of beam. A technology for forming the beam may be a beamforming (beamforming) technology or another technical means. The beamforming technology may be specifically a digital beamforming technology, an analog beamforming technology, or a hybrid digital/analog beamforming technology. Same information or different information may be sent by using different beams. Optionally, a plurality of beams having a same or similar communication feature may be considered as one beam. One beam may include one or more antenna ports, configured to transmit a data channel, a control channel, a sounding signal, and the like.

The beam may alternatively be understood as a spatial resource, and may be a transmit or receive precoding vector having an energy transmission direction. The energy transmission direction may indicate that a signal, received in a spatial position, on which precoding processing is performed by using the precoding vector has a good receive power, for example, meets a received demodulation signal to noise ratio. The energy transmission direction may alternatively indicate that same signals sent from different spatial positions and received by using the precoding vector have different receive powers. A same device (for example, a network device or a terminal device) may have different precoding vectors, and different devices may also have different precoding vectors, that is, correspond to different beams. For a configuration or a capability of a device, one device may use one or more of a plurality of different precoding vectors at a same moment, in other words, one or more beams may be formed at the same time.

From perspectives of transmission and reception, beams may be classified into a transmit beam (transmission beam, Tx beam) and a receive beam (reception beam, Rx beam). The transmit beam may indicate distribution of signal strength formed in different directions in space after a signal is transmitted via an antenna, and the receive beam may indicate distribution of signal strength, in different directions in space, of a radio signal received from an antenna. A receive beam of a signal is directed to a transmit beam of the signal as much as possible, to improve a received signal to noise ratio and avoid interference between different signals.

In embodiments of this application, a relay device part may form one or more beams or one or more beam sets. In a beam set A ({a0, a1, a2, ...}), a beam set B ({b0, b1, b2, ...}), and a beam set C ({c0, c1, c2, ...}), a0, a1, a2, b0, b1, b2, c0, c1, and c2 are beam indexes. It should be understood that one beam set (where the beam set may also be referred to as a set of beams) includes at least one beam. A quantity of relay access side or backhaul side beam sets or beams may be any value in {1, 2, 4, 6, 8, 10, 16, 24, 32}. It is assumed that a quantity of beam sets or beams in the set is not greater than K, where K may be any value in {1, 2, 4, 6, 8, 10, 16, 24, 32}.

The beam/beam set further corresponds to coverage range information. For example, the coverage range information of the beam set is shown in Table 1.

Table 1

| Beam set index | Coverage range information |
| --- | --- |
| A | Coverage range #A |
| B | Coverage range #B |
| C | Coverage range #C |
| ... | ... |

For example, the coverage range information of the beam in the beam set is shown in Table 2.

Table 2

| Beam index | Coverage range information |
| --- | --- |
| a0 | Coverage range #a0 |
| a1 | Coverage range #a1 |
| a2 | Coverage range #a2 |
| ... | ... |

A beam or a beam set corresponds to a group of spatial coverage range parameters, spatial region range parameters, spatial coverage region information, or spatial coverage information, and these concepts have equivalent effects. The spatial coverage information is a coverage angle range (a coverage direction, or a coverage direction range). Specifically, the spatial coverage information may include a horizontal angle and/or a vertical angle. To be specific, the coverage angle range information may include at least one of the following: a horizontal angle width, a horizontal angle start value, a horizontal angle end value, a vertical angle width, a vertical angle start value, a beam peak direction (beam peak direction), a beam width, a beam center direction (beam center direction), a rated beam effective isotropic radiated power (Effective Isotropic Radiated Power, EIRP), an over-the-air (Over-the-Air, OTA) peak direction set (peak direction set), a beam direction pair (beam direction pair), or a vertical angle end value. Each beam is associated with a beam identifier, a reference beam direction pair, a beam width, a rated beam EIRP, an OTA peak direction set, a beam direction pair of a maximum steering direction, and a beam-related rated beam EIRP and beam width. For the beam and the beam direction pair, a rated beam EIRP level is a maximum power declared by a repeater for radiation in a related beam peak direction. For each beam peak direction associated with a beam direction pair in the OTA peak direction set, a specific rated beam EIRP level may be required.

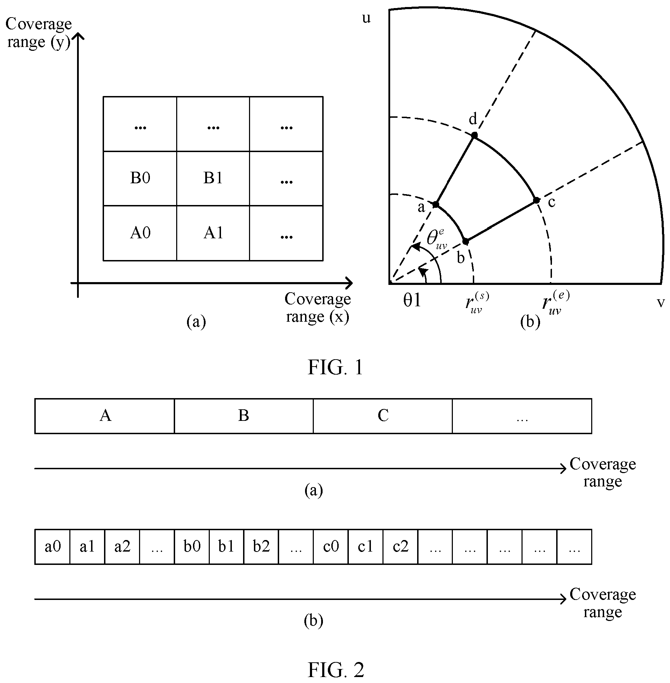

Section (a) in FIG. 1 is a diagram in which a coverage region is a square, that is, a coverage region of a beam or a beam set is two-dimensional. A block in section (a) in FIG. 1 represents a coverage range of a beam set or a beam. Section (a) in FIG. 1 shows only coverage ranges of adjacent beams. It should be understood that coverage ranges between beam sets or beams may overlap. A coverage range of a relay device access side beam may approximately correspond to a region that is defined by both a horizontal (horizontal) direction and a vertical (vertical) direction in array antenna shaping. For example, an x-axis corresponds to the horizontal direction, and a y-axis corresponds to the vertical direction. A coverage range of a beam or a beam set may be defined as an angle width of 3 dB (decibel, dB) (the angle width may alternatively be another value, for example, 5 dB or 6 dB), that is, an angle region in a direction with a difference of 3 dB from a gain of a strongest beam. Section (b) in FIG. 1 shows a corresponding coverage region in a polar coordinate region, where a coverage region of a beam or a beam set is a region abcd, a radius start location is $r_{uv}^{(s)}$, a radius end location is $r_{uv}^{(e)}$, an angle start location is $\theta 1$, and an angle end location is $\theta_{uv}^{(e)}$.

Coverage ranges corresponding to relay device access side beam sets or beams may be adjacent. When the coverage ranges corresponding to the beam sets or the beams are adjacent, as shown in section (a) in FIG. 2, first information sent by the relay device may include a start coverage range of the beam set A, coverage range width information of the beam sets A, B, C, and the like, and an adjacent/relative order of each beam set. In other words, the network device may determine a coverage range of each beam set based on the foregoing information. Alternatively, the first information sent by the relay device may include a start coverage range of the beam a0, coverage range width information of each beam (beams such as a0, a1, a2, ..., b0, b1, b2, ..., c0, c1, and c2 shown in section (b) in FIG. 2), and an adjacent/relative order of each beam. In other words, the network device may determine a coverage range of each beam based on the foregoing information.

3. Beam indication information

The beam indication information indicates a beam used for transmission, and the beam includes a transmit beam and/or a receive beam. The beam indication information is sent by the transmit end to the receive end before transmission.

The beam indication information may include one or more of the following parameters: a beam number (also referred to as serial number, index, identifier, or the like), a resource number of an uplink signal, a resource number of a downlink signal, an absolute index of a beam, a relative index of a beam, a logical index of a beam, an index of an antenna port corresponding to a beam, an index of an antenna port group corresponding to a beam, an index of a downlink signal corresponding to a beam, a time index of a downlink synchronization signal block corresponding to a beam, beam pair link (beam pair link, BPL) information, a transmit parameter (Tx parameter) corresponding to a beam, a receive parameter (Rx parameter) corresponding to a beam, a transmit weight corresponding to a beam, a weight matrix corresponding to a beam, a weight vector corresponding to a beam, a receive weight corresponding to a beam, an index of a transmit weight corresponding to a beam, an index of a weight matrix corresponding to a beam, an index of a weight vector corresponding to a beam, an index of a receive weight corresponding to a beam, a receive codebook corresponding to a beam, a transmit codebook corresponding to a beam, an index of a receive codebook corresponding to a beam, an index of a transmit codebook corresponding to a beam, or the like. The downlink signal may include one or more of the following signals: a synchronization signal, a broadcast channel, a broadcast signal demodulation signal, a synchronization signal block (synchronization signal block, SSB), a CSI-RS, a cell specific reference signal (cell specific reference signal, CS-RS), a UE specific reference signal (user equipment specific reference signal, US-RS), a DMRS, a downlink data channel demodulation reference signal, and a downlink phase noise tracking signal. The uplink signal may include one or more of the following signals: an uplink random access sequence, an SRS, an uplink control channel demodulation reference signal, an uplink data channel demodulation reference signal, and an uplink phase noise tracking signal.

4. Quasi co-location (quasi co-location, QCL)

The QCL indicates that a plurality of resources have one or more same or similar communication features. For a plurality of resources having a QCL relationship, a same or similar communication configuration may be used. Specifically, signals corresponding to antenna ports that have a QCL relationship have a same parameter; or a parameter (which may also be referred to as a QCL parameter) of an antenna port may be used to determine a parameter of another antenna port that has a QCL relationship with the antenna port; or two antenna ports that have a QCL relationship have a same parameter; or a parameter difference between two antenna ports that have a QCL relationship is less than a threshold. The parameter may include one or more of the following: a delay spread (delay spread), a Doppler spread (doppler spread), a Doppler shift (doppler shift), an average delay (average delay), an average gain, and a spatial receive parameter (spatial Rx parameter). The spatial receive parameter may include one or more of the following: an angle of arrival (angle of arrival, AOA for short), an average AOA, an AOA spread, an angle of departure (angle of departure, AOD for short), an average angle of departure AOD, an AOD spread, a receive antenna spatial correlation parameter, a transmit antenna spatial correlation parameter, a transmit beam, a receive beam, and a resource identifier.

In an NR protocol, the QCL relationship may be classified into four types shown in Table 3 based on different parameters.

Table 3

| QCL Type | Description |
|---|---|
| QCL type A | Doppler shift, Doppler spread, average delay, and delay spread |
| QCL type B | Doppler shift and Doppler spread |
| QCL type C | Doppler shift and average delay |
| QCL type D | Spatial Rx parameter |

5. TCI state

The TCI state may indicate a QCL relationship between two reference signals. Each TCI state may include a serving cell index (serving cell index), a bandwidth part (bandwidth part, BWP) identifier (identifier, ID), and a reference signal resource identifier. The reference signal resource identifier may be, for example, at least one of the following: a non-zero power (non-zero power, NZP) CSI-RS resource identifier (NZP-CSI-RS-ResourceId), a non-zero power CSI-RS reference set identifier (NZP-CSI-RS-ResourceSetId), or an SSB index (SSB-Index). Different TCI states may be distinguished by a TCI state identifier (TCI-statedId).

For example, a TCI state may be shown as follows:

```
TCI-State ::=                        SEQUENCE {//TCI state
    tci-StateId                          TCI-StateId, //TCI state identifier
    qcl-Type1                              QCL-Info, //quasi-co-location information
    qcl-Type2                              QCL-Info
OPTIONAL,    -- Need R
    ...
}
QCL-Info ::=                         SEQUENCE {
    cell                                 ServeCellIndex   //serving cell index
OPTIONAL,      -- Need R
    bwp-Id                               BWP-Id        //bandwidth part ID
OPTIONAL, -- Cond CSI-RS-Indicated
    referenceSignal                      CHOICE {       //reference signal
        csi-rs                               NZP-CSI-RS-ResourceId,
        ssb                                  SSB-Index
    },
    qcl-Type                             ENUMERATED {type A, type B, type C,
type D}, //four types of the QCL
    ...
}
```

The serving cell index, the BWP ID, and the reference signal resource identifier indicate a reference signal resource used in a beam training process, and a serving cell and a BWP that correspond to the reference signal resource. Because the network device may send reference signals based on different reference signal resources by using different transmit beams, the reference signals sent by using different transmit beams may be associated with different reference signal resources. Because the terminal device may receive reference signals based on different reference signal resources by using different receive beams, the reference signals received by using different receive beams may also be associated with different reference signal resources. Therefore, in the beam training process, the terminal device may maintain a correspondence between the receive beam and each of the serving cell index, the BWP ID, and the reference signal resource identifier, and the network device may maintain a correspondence between the transmit beam and each of the serving cell index, the BWP ID, and the reference signal resource identifier. A pairing relationship between the receive beam and the transmit beam may be established based on the reference signal resource identifier.

The TCI state may be used as beam indication information. Before sending a reference signal, the network device may send the TCI state to the terminal device. The terminal device may determine a receive beam of the reference signal based on the TCI state indicated by the network device, and the network device may determine a transmit beam of the reference signal based on the same TCI state.

Because there is an association relationship between a reference signal resource and a beam, beam training and beam management may be performed based on the reference signal in a conventional technology. The network device may send different reference signals based on different reference signal resources by using different beams, and the terminal device may receive different reference signals based on different reference signal resources by using different receive beams. The terminal device may measure reference signals from different transmit beams/receive beams, to determine a better beam.

However, in a scenario in which the network device communicates with the terminal device via the relay device, how to implement beam management in the network device, the relay device, and the terminal device to determine a better communication beam between the network device and the terminal device is still a problem to be resolved. Embodiments of this application provide a reference signal sending method. The network device may configure and activate a reference signal resource for the relay device, so that the relay device can forward a reference signal transmitted between the network device and the terminal device, and the terminal device can measure the reference signal that is from the network device and that is forwarded by the relay device, to implement beam management in a relay scenario.

The following describes a communication system/network to which the technical solutions provided in this application are applied.

Technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, and a universal mobile telecommunications system (universal mobile telecommunications system, UMTS), a 5th generation (5th generation, 5G) system or NR, a next 6th generation (6th generation, 6G) system, or another future communication system.

In addition, the relay communication method provided in this application is mainly applied to a scenario in which a relay device exists between a network device and a terminal device. The relay device is configured to assist communication between the network device and the terminal device, and the relay device may forward a signal transmitted between the network device and the relay device. A side on which the relay device communicates with the terminal device may be referred to as an access (access) side, and a side on which the relay device communicates with the network device is referred to as a backhaul (backhaul) side. In an implementation, an access side and a backhaul side of the relay device each have at least one group of antennas. The antenna on the access side may be configured to receive a signal from the terminal device and forward a signal from the network device to the terminal device. The antenna on the backhaul side may be configured to receive the signal from the network device and forward the signal from the terminal device to the network device.

In this application, the relay device may be used in a multi-hop relay cascading communication network. To be specific, the relay device may establish a connection to the network device by using at least one previous-level relay device, and is controlled by the network device. In this case, the previous-level relay device may be considered as a special network device. Alternatively, the relay device may establish a connection to the terminal device by using at least one next-level relay device. In this case, the next-level relay device may be considered as a special terminal device. The method in this application may also be applied to a multi-level relay scenario.

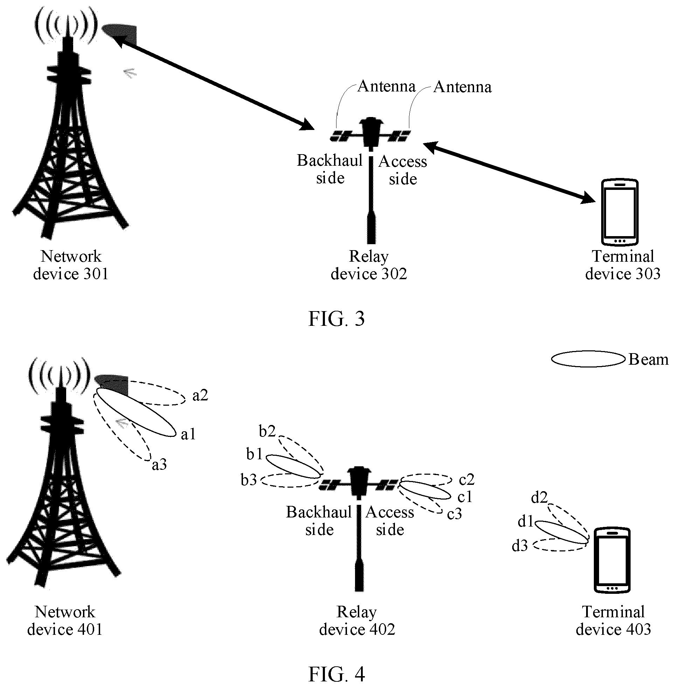

For example, FIG. 3 is a diagram of a communication system according to this application. The communication system may include a network device 301, a relay device 302, and a terminal device 303. As shown in FIG. 3, the relay device 302 may communicate with the terminal device 303 by using an antenna on an access side, and may communicate with the network device 301 by using an antenna on a backhaul side. Therefore, the relay device 302 may relay communication between the network device 301 and the terminal device 303.

Optionally, in a possible relay communication method, the relay device may amplify a received signal and then forward an amplified signal. FIG. 3 is used as an example. The relay device 302 may amplify a signal that is received from the network device 301 and that is received by using the antenna on the backhaul side, and then forward an amplified signal to the terminal device 303 by using the antenna on the access side. In addition, the relay device 302 may amplify a signal that is received from the terminal device 303 and that is received by using the antenna on the access side, and then forward the amplified signal to the network device 301 by using the antenna on the backhaul side.

Optionally, in a relay communication scenario, communication between the network device and the relay device and communication between the relay device and the terminal device may be performed based on beams. The network device may communicate with the relay device by using at least one beam, the relay device may communicate with the network device by using at least one beam on the backhaul side, the relay device may further communicate with the terminal device by using at least one beam on the access side, and the terminal device may communicate with the relay device by using at least one beam. For example, FIG. 4 is a diagram of another communication system according to an embodiment of this application. The communication system includes a network device 401, a relay device 402, and a terminal device 403. As shown in FIG. 4, the network device 401 may include at least one beam (for example, a beam a1, and optionally, may further include beams a2 and a3). The terminal device 403 may include at least one beam (for example, a beam b1, and optionally, may further include beams b2 and b3). An access side and a backhaul side of the relay device 402 may also include at least one beam (for example, a beam c1, and optionally, may further include beams c2 and c3).

The communication system/network architecture described in embodiments of this application is intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

The network device in embodiments of this application may be a device configured to communicate with a terminal device. The network device may be a base transceiver station (base transceiver station, BTS) in a global system for mobile communications (global system for mobile communications, GSM) or a code division multiple access (code division multiple access, CDMA) network, may be an NB (NodeB) in WCDMA (wideband code division multiple access, wideband code division multiple access), may be an evolved NodeB (evolved NodeB, eNB, or eNodeB) in an LTE system, or may be a wireless controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or one or a group of (including a plurality of antenna panels) antenna panels of a base station in a 5G system. Alternatively, the network device may be a network node that forms a gNodeB or a transmission point, for example, a baseband unit (baseband unit, BBU) or a distributed unit (distributed unit, DU). This is not limited in embodiments of this application.

The terminal device in embodiments of this application may be user equipment (User Equipment, UE), an access terminal, a subscriber unit, a subscriber station, a mobile station, a remote station, a remote terminal, a mobile device, a user terminal, a terminal device, a wireless communication device, a user agent, or a user apparatus. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a future 5G network, or a terminal in a future evolved public land mobile network (public land mobile network, PLMN). This is not limited in embodiments of this application.

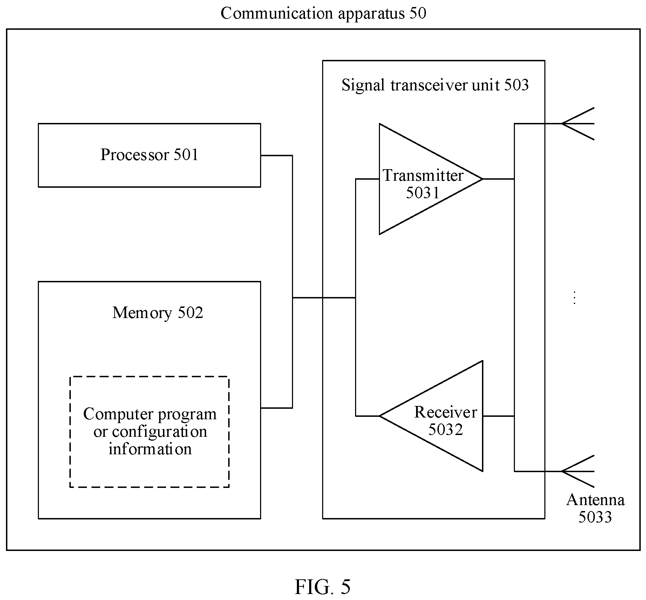

FIG. 5 is a diagram of a structure of a communication apparatus according to an embodiment of this application. As shown in FIG. 5, the communication apparatus 50 may include a processor 501, a memory 502, and a signal transceiver unit 503. The signal transceiver unit 503 may include a transmitter 5031, a receiver 5032, and a plurality of antennas 5033. The transmitter 5031 may be configured to send a signal by using the antenna 5033, and the receiver 5032 may be configured to receive a signal by using the antenna 5033. The memory may store a computer program or configuration information.

In a possible implementation, structures of the network device and the terminal device in this embodiment of this application may be shown in the communication apparatus in FIG. 3.

The relay device in this embodiment of this application has a signal forwarding function. Optionally, the relay device may further amplify a signal, or the relay device may further shift a carrier of a signal, or the relay device may further demodulate a signal, re-modulate the signal, and then forward the signal, or the relay device may further reduce noise of a signal, and then forward the signal. Optionally, the relay device may further have another form, which is referred to as a reflector, or referred to as a reflecting surface, or may be referred to as another possible name: an intelligent reflecting surface (intelligent reflecting surface), a reconfigurable intelligent surface (reconfigurable intelligent surface, RIS), a reflecting array, an intelligent reflecting array (intelligent reflecting array), a reflector, an intelligent reflector, a backscatter device (backscatter device), a passive device (passive device), a semi-active device (semi-passive device), and an ambient signal device (ambient signal device). Optionally, the relay device may also be considered as a terminal device in a special form.

In a possible implementation, the relay device may be controlled by a network side, and this relay device may be referred to as a network controlled repeater (network controlled repeater, NCR). The network device may control the NCR to perform more performance enhancement functions, for example, beam control, relay transmit power control, relay amplification gain control, relay beam scanning control, relay precoding control, uplink or downlink signal forwarding direction control, and on-off control. The NCR may include a control unit and a forwarding unit. The control unit may be configured to perform signaling exchange with the network device, to implement a control function. The forwarding unit may be configured to forward a signal.

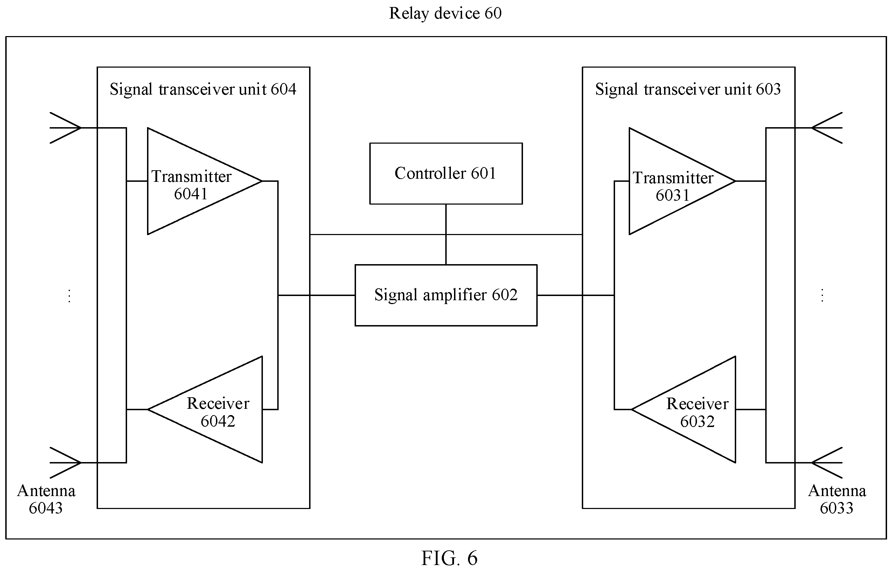

For example, FIG. 6 is a diagram of a structure of a relay device 60 according to an embodiment of this application. The relay device 60 may include a controller 601, a signal amplifier 602, a signal transceiver unit 603, and a signal transceiver unit 604. The controller 301 is also referred to as a mobile terminal (mobile terminal, MT) or an NCR-MT. The signal amplifier 602, the signal transceiver units 603, and 604 may form a forwarding (forwarding, Fwd) module or an NCR-Fwd module (which may also be referred to as a radio unit (radio unit, RU), a distributed unit (distributed unit, DU), a distributed radio unit (distributed radio unit, DRU), or the like).

Still refer to FIG. 6. The signal transceiver unit 603 may include a transmitter 6031, a receiver 6032, and a plurality of antennas 6033. The transmitter 6031 may be configured to send a signal by using the antenna 6033, and the receiver 6032 may be configured to receive a signal by using the antenna 6033. The signal transceiver unit 604 may include a transmitter 6041, a receiver 6042, and a plurality of antennas 6043. The transmitter 6041 may be configured to send a signal by using the antenna 6043, and the receiver 6042 may be configured to receive a signal by using the antenna 6043.

In a relay communication scenario, a link between a network device and a forwarding module of a relay device connected to the network device is a backhaul link (backhaul link), and a link between the forwarding module of the relay device and a terminal device connected to the relay device is an access link (access link). A forwarding link may include the backhaul link and the access link. In this embodiment of this application, the relay device may receive a signal from the network device by using the backhaul link, and forward the received signal to the terminal device by using the access link. A signal that is received by the relay device by using the backhaul link and forwarded by the relay device by using the access link may be a reference signal, such as an SSB or a CSI-RS, or may be a data signal. This is not limited in this application. Alternatively, the relay device may receive a signal from the terminal device by using the access link, and forward the received signal to the network device by using the backhaul link. A signal that is received by the relay device by using the access link and forwarded by the relay device by using the backhaul link may be a reference signal, such as an SRS, or may be a data signal. This is not limited in this application. In the backhaul link, the relay device may receive a signal from the network device, and/or send a signal to the network device by using a backhaul side antenna. A beam used by the relay device to receive a signal or send a signal by using the backhaul side antenna is an access side beam. In the access link, the relay device may send a signal to the terminal device, and/or receive a signal from the terminal device by using an access side antenna. A beam used by the relay device to send a signal or receive a signal by using the access side antenna is a backhaul side beam.

In addition, when a signal is transmitted between the relay device and the network device, a relay controller and the backhaul link may have same information such as a beam. For example, the relay controller and the backhaul link share an antenna. Specifically, considering that the controller (MT) and the forwarding module Fwd simultaneously receive and transmit signals (for example, the control signal and the forwarded signal may be frequency-division multiplexed), the controller and the backhaul link have a same receive beam. If there is only a forwarded signal on a forwarding occasion (forwarding occasion) (there is no signal receiving and sending relationship between the controller and a base station), the network device indicates beam information on the backhaul side. Alternatively, receive beams of the MT and the Fwd backhaul side (oriented to a previous-level relay device or network device) may have a QCL relationship (for example, QCL type A and QCL type D). This patent is discussed based on the assumption: By default, a Fwd backhaul side beam and an MT beam are the same, or have a preset QCL relationship. To simplify discussion, the beams may be collectively referred to as backhaul side beams. For example, during downlink communication, a signal transceiver unit (for example, the signal transceiver unit 603) of the relay device is configured to receive a signal from the network device, and another signal transceiver unit (for example, the signal transceiver unit 604) is configured to forward an amplified received signal to the terminal device. In addition, the controller 601 may further communicate with the network device or the terminal device by using the signal transceiver unit 603 or 604. For example, the controller 604 communicates with the network device by using the signal transceiver unit 603, and is configured to establish a communication link, beam alignment, and the like between the relay device and the network device; may be further configured to receive configuration or indication information of the network device, so that the network device controls a working time, a working status, a working manner, or the like of the repeater; or is configured to receive a trigger signal of the terminal device, so that the relay device enters a corresponding working mode as required. For another example, the controller 601 may further determine a working status (for example, an amplification multiple or a phase) of the signal amplifier 602 based on the indication information of the network device or measurement information of the controller. It should be understood that each unit in the figure may be one or more. For example, there may be a plurality of signal amplifiers, respectively corresponding to different polarization directions or relay radio frequency channels.

The following describes specific implementations of the relay communication method provided in this embodiment in detail with reference to accompanying drawings.

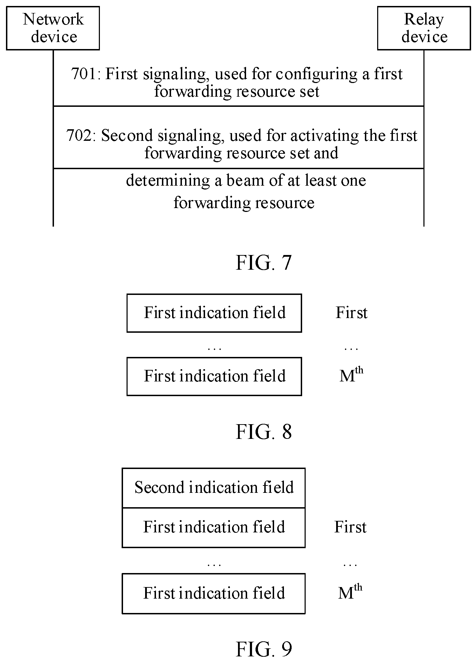

FIG. 7 is a flowchart of a relay communication method according to an embodiment of this application. As shown in FIG. 7, the relay communication method may include step 701 and step 702.

Step 701: A network device sends first signaling to a relay device, and correspondingly, the relay device receives the first signaling from the network device. The first signaling may be used for configuring a first forwarding resource set.

In this embodiment of this application, the first signaling may be used for configuring at least one forwarding resource set for the relay device. Each forwarding resource set may include at least one forwarding resource, and quantities of forwarding resources included in different forwarding resource sets may be the same or different.

In this embodiment of this application, an example in which the first signaling is used for configuring the first forwarding resource set is used for description. The first forwarding resource set belongs to the at least one forwarding resource set indicated by the first signaling. The first forwarding resource set may include at least one forwarding resource, and different forwarding resources correspond to different signals.

Optionally, the forwarding resource may be a semi-persistent resource, and the first forwarding resource set may be a semi-persistent resource set. In a possible implementation, the first forwarding resource set may be an SP CSI-RS resource set or an SP SRS resource set, and a transmitted signal is an SP CSI-RS or an SP SRS.

Optionally, the first signaling may be used for configuring a beam of the at least one forwarding resource in the first forwarding resource set. The beam of the at least one forwarding resource may include at least one of the following: a network device beam, a relay device backhaul side beam, and a relay device access side beam. The network device beam is a beam used for communication between the network device and the relay device or a terminal device, the relay device backhaul side beam is a beam used for communication between the relay device and the network device or a previous-level relay device, and the relay device access side beam is a beam used for communication between the relay device and the terminal device or a next-level relay device. The previous-level relay device of the relay device is located between the relay device and the network device, and the next-level relay device of the relay device is located between the relay device and the terminal device.

For example, as shown in FIG. 2, a beam a1, a beam a2, and a beam a3 are network device beams, a beam b1, a beam b2, and a beam b3 are relay device backhaul side beams, and a beam c1, a beam c2, and a beam c3 are relay device access side beams.

Optionally, a quantity of beams of the at least one forwarding resource that are configured by using the first signaling does not exceed a first threshold, where the first threshold is a preconfigured value, or the first threshold is a quantity of beams indicated in capability information of the relay device. The capability information of the relay device may be preconfigured or reported by the relay device.

It should be understood that the network device configures the first forwarding resource set for the relay device, so that the relay device can forward a signal. The forwarded signal is transmitted between the network device and the terminal device and corresponds to the at least one forwarding resource in the first forwarding resource set. The signal corresponding to the at least one forwarding resource may be sent by the network device to the terminal device (which may be understood as a downlink signal), or may be sent by the terminal device to the network device (which may be understood as an uplink signal).

Optionally, a beam of the at least one forwarding resource may be used for transmitting the signal corresponding to the at least one forwarding resource.

In a possible implementation, the network device beam of the at least one forwarding resource may be used for sending, to the relay device, the signal corresponding to the at least one forwarding resource; the relay device backhaul side beam of the at least one forwarding resource may be used by the relay device to receive the signal from the network device; and the relay device access side beam of the at least one forwarding resource may be used by the relay device to forward the signal to the terminal device. In this case, the network device beam may be a transmit beam of the network device, the relay device backhaul side beam may be a receive beam on a relay device backhaul side, and the relay device access side beam may be a transmit beam on a relay device access side.

In another possible implementation, the network device beam of the at least one forwarding resource may be used for receiving a signal that corresponds to the forwarding resource and that is sent by the relay device; a relay device backhaul side beam of the forwarding resource may be used for forwarding, to the network device, the signal corresponding to the forwarding resource; and a relay device access side beam of the forwarding resource may be used for receiving the signal that corresponds to the forwarding resource and that is sent by the terminal device. In this case, the network device beam may be a transmit beam of the network device, the relay device backhaul side beam may be a receive beam on a relay device backhaul side, and the relay device access side beam may be a transmit beam on a relay device access side.

Optionally, the first signaling may indicate, based on QCL information of a beam, to configure beam information of the at least one forwarding resource in the first forwarding resource set. In a possible implementation, the first signaling may include QCL information of the beam of the at least one forwarding resource.

Step 702: The network device sends second signaling to the relay device, and correspondingly, the relay device receives the second signaling from the network device. The second signaling may be used for activating or deactivating the first forwarding resource set.

In this embodiment of this application, the forwarding resource in the first forwarding resource set may be a semi-persistent resource, and the semi-persistent resource takes effect only after being activated.

If the first forwarding resource set in the relay device has not been activated, the second signaling sent by the network device to the relay device may be used for activating the first forwarding resource set. The first forwarding resource set is activated, so that in a subsequent activation period of the first forwarding resource set, the relay device can receive and forward a corresponding signal based on the forwarding resource in the first forwarding resource set.

After the first forwarding resource set of the relay device is activated, how to deactivate the first forwarding resource set may also be indicated by using the second signaling.

The following uses an example in which the second signaling is used for activating the first forwarding resource set for description.

Optionally, if the first signaling indicates one or more forwarding resource sets, the second signaling may be used for activating some or all of the one or more previously configured forwarding resource sets. In this embodiment of this application, the first forwarding resource set in the one or more forwarding resource sets is used as an example for description. After the relay device receives the second signaling, the relay device may determine the activated first forwarding resource set.

Optionally, the second signaling may be further used for determining a beam of at least one forwarding resource in the activated first forwarding resource set. The beam of the forwarding resource may include at least one of the following: a network device beam, a relay device backhaul side beam, and a relay device access side beam.

In a possible implementation, the beam of the forwarding resource in the activated first forwarding resource set is the same as the beam of the forwarding resource in the first forwarding resource set configured by using the first signaling.

The second signaling does not modify the beam of the forwarding resource in the first forwarding resource set.

In another possible implementation, the second signaling may be used for updating the beam of the forwarding resource in the first forwarding resource set. Therefore, the beam of the forwarding resource in the activated first forwarding resource set may be different from the beam of the forwarding resource in the first forwarding resource set configured by using the first signaling.

In still another possible implementation, in step 701, the first signaling may not be used for configuring the beam of the at least one forwarding resource in the first forwarding resource set. In this case, the second signaling indicates the beam of the at least one forwarding resource in the first forwarding resource set. In this way, the relay device can determine the beam of the at least one forwarding resource in the activated first forwarding resource set based on the second signaling.

In conclusion, the relay device may determine the beam of the at least one forwarding resource in the activated first forwarding resource set based on the second signaling. The beam of the at least one forwarding resource may be used by the relay device to forward a signal corresponding to the at least one forwarding resource.

Optionally, the relay device backhaul side beam of the forwarding resource may be used by the relay device to receive a signal from the network device or the previous-level relay device, and the relay device access side beam of the forwarding resource may be used by the relay device to forward the signal to the terminal device or the next-level relay device. Alternatively, the relay device backhaul side beam of the forwarding resource may be used by the relay device to receive a signal from the terminal device or the next-level relay device, and the relay device access side beam of the forwarding resource may be used by the relay device to forward the signal to the network device or the previous-level relay device.

Based on the foregoing solution, in a scenario in which there is the relay device, the network device may configure and activate a forwarding resource for the relay device, and indicate a beam of at least one forwarding resource for the relay device, so that the relay device can correctly forward a signal based on the forwarding resource and the beam of the forwarding resource. Because the forwarded signal corresponds to the beam, beam measurement and beam management can still be implemented in the scenario in which there is the relay device.

In the foregoing step 701:

Optionally, the first signaling may further include at least one piece of the following information: an identifier or an index of the first forwarding resource set, an identifier or an index of the forwarding resource in the first forwarding resource set, a resource mapping relationship, a power offset, a periodicity, a time offset in the periodicity, time information, frequency information, QCL, or the like.

The QCL information may include QCL information of the network device beam, QCL information of the relay device backhaul side beam, and QCL information of the relay device access side beam. It should be understood that the QCL information of the forwarding resource may indicate the beam of the forwarding resource.

Optionally, the time offset in the periodicity may be an offset at a granularity of a symbol (symbol Offset).

Optionally, the time information may include duration in a symbol unit (durationInSymbols), a start position of the symbol, an end position of the symbol, and the like.

Optionally, in this embodiment of this application, the foregoing periodicity, the time offset in the periodicity, the time information, the frequency information, and the like may be collectively referred to as time-frequency location information.

Optionally, the relay device may have a signal amplification function, and the first signaling may further include a signal amplification gain.

Optionally, the first signaling may be radio resource control (radio resource control, RRC) signaling.

In a possible implementation, content of the first signaling may be shown as follows:

<Definition of forwarding resource configuration: The resource configuration includes one or more resource sets, and one resource set includes one or more resources>

Fwd-ResourceConfig ::=        SEQUENCE {

fwd-ResourceConfigId            FWD-ResourceConfigId, <resource configuration identifier>

<The resource configuration includes a resource set list, and the resource set list may be an FWD-RS-SSB resource set list>

FWD-ResourceSetList        CHOICE {

<The FWD resource set list includes a plurality of FWD resource sets, a plurality of FWD-RS resource sets, or a plurality of FWD-SSB resource sets, or both>

FWD-RS-SSB-ResourceSetList                SEQUENCE {

FWD-ResourceSetList        SEQUENCE    (SIZE    (1..maxNrofFWD-ResourceSetsPerConfig)) OF    FWD-ResourceSetId (a maximum of N0 sets, for example, N0=32)

FWD-RS-ResourceSetList        SEQUENCE  (SIZE  (1..maxNrofFWD-RS-ResourceSetsPerConfig)) OF    FWD-RS-ResourceSetId (a maximum of N1 sets, for example, N1=16)

FWD-SSB-ResourceSetList        SEQUENCE (SIZE  (1..maxNrofFWD-SSB-ResourceSetsPerConfig)) OF FWD-SSB-ResourceSetId    (a maximum of N2 sets, for example, N2=4)

},

<A carrier index of the forwarding resource, where Carrier-id may represent identifier information of a carrier, or an index of a serving cell ServCellIndex>

carrier                            Carrier-Id,

<A frequency of one carrier is divided into a plurality of bandwidth blocks, and bwp-id indicates an identifier of a bandwidth block>

bwp-Id                        BWP-Id,

<Time domain sending characteristic of a resource in the resource configuration: periodic sending, semi-persistent sending, or aperiodic sending>

resourceType                ENUMERATED {aperiodic, semiPersistent, periodic},

...

<The resource set includes one or more resources, the FWD-RS resource set includes one or more FWD-RS resources, and the FWD-SSB resource set includes one or more SSB resources. Because there are many types of resource sets, details are not provided herein>

backhualBeamList //candidate beam set on a backhaul side of a forwarding link (note: If a quantity of beams in the set is greater than 1, a MAC-CE needs to further activate an SP resource, or a beam index needs to be specified during DCI indication)

SEQUENCE (SIZE (1..maxNrofBackhualBeams)) OF INTEGER (0..n1−1) OPTIONAL, //optional parameter

accessBeamList //candidate beam set on an access side of a forwarding link (note: If a quantity of beams in the set is greater than 1, a MAC-CE needs to further activate an SP resource, or a beam index needs to be specified during DCI indication) SEQUENCE (SIZE (1..maxNrofAccessBeams)) OF INTEGER (0..n2−1) OPTIONAL, //optional parameter

...,

gnbBeamList //candidate beam set of a base station on a backhaul side of a forwarding link (note: If a quantity of beams in the set is greater than 1, a MAC-CE needs to further activate an SP resource, or a beam index needs to be specified during DCI indication) SEQUENCE (SIZE (1..maxNrofSlotBeams)) OF INTEGER (0..n1−1) OPTIONAL, //optional parameter

...,

}

Further, the FWD resource set, the FWD-RS resource set, or the RS-SSB resource set may include one or more resources. For example, the FWD resource set may be:

FWD-ResourceSet ::= SEQUENCE {

FWD-ResourceSetId FWD-ResourceSetId,

<Forwarding resource configuration information>

fwd-Resources SEQUENCE (SIZE (1..maxNrofFWD-ResourcesPerSet)) OF FWD-ResourceId,

<Whether time domain of a resource in the resource configuration is repeatedly forwarded, to be specific, in an on state, time domain is repeatedly forwarded; otherwise, a transmit beam may change>

repetition ENUMERATED {on, off} PTIONAL,

...,

}

Further, the FWD resource, the FWD-RS resource, or the RS-SSB resource may indicate at least one piece of the following information: a resource identifier or index, a resource mapping relationship, a power offset, a periodicity and a time offset in the periodicity, time information, frequency information, or QCL information. Using the FWD resource as an example, a specific signaling format is as follows:

```
    FWD-Resource ::=                    SEQUENCE {//forwarding resource configuration
information

        nzp-CSI-RS-ResourceId          NZP-CSI-RS-ResourceId, //non-zero power
CSI-RS resource index

        resourceMapping                fwd-ResourceMapping, //resource mapping
information

        powerControlOffset             INTEGER (–8..15), //power offset with
respect to a data channel PDSCH

        gainControlOffsetSS            ENUMERATED {db-3, db0, db3, db6}
//amplification gain offset value          OPTIONAL

        periodicityAndOffset           CSI-ResourcePeriodicityAndOffset
//periodicity and time offset in the periodicity, where this field exists only in a periodic or semi-
persistent resource.

        qcl-InfoPeriodicCSI-RS         TCI-StateId //QCL information (or beam
information), which exists only in periodic resource configuration       OPTIONAL

            ...

    }

    fwd-ResourceMapping ::=            SEQUENCE {//forwarding resource mapping
information

        carrier                 Carrier-Id,
        <A frequency of one cell is divided into a plurality of bandwidth blocks, and bwp-id indicates
an identifier of a bandwidth block>

        bwp-Id                  BWP-Id,
        <Time domain sending characteristic of a resource in the resource configuration: periodic
sending, semi-persistent sending, or aperiodic sending>

        nrofPorts   //quantity of ports                ENUMERATED {p1, p2},

        firstOFDMSymbolInTimeDomain        INTEGER (0..13), //start OFDM symbol
position in a time slot

        endOFDMSymbolInTimeDomain          INTEGER (2..12)   //end OFDM symbol
position of a resource in a time slot (where more time positions may be included)
OPTIONAL

        freqBand       //frequency domain resource location, indicating a frequency location and
bandwidth of a carrier or a bandwidth part in which a forwarded signal is located
```

CSI-FrequencyOccupation,

...

}

The levels and inclusion relationships of the signaling are only examples. In practice, an upper level of each information element (or field) may be adjusted. This is not limited.

In a possible implementation, an example in which the resource in the first forwarding resource set is a non-zero power (non-zero power) CSI-RS (NZP-CSI-RS) resource is used. Content of the first signaling may be shown as follows:

NZP-CSI-RS-ResourceSet-Repeater ::= SEQUENCE {//relay non-zero power CSI-RS resource set configuration information

    nzp-CSI-ResourceSetId NZP-CSI-RS-ResourceSetId, //relay non-zero power CSI-RS resource set index

    nzp-CSI-RS-Resources-Repeater SEQUENCE (SIZE(1..maxNrofNZP-CSI-RS-ResourcesPerSet)) OF NZP-CSI-RS-ResourceId, //relay non-zero power CSI-RS resource index

    repetition ENUMERATED {on, off} //whether to perform sending repeatedly OPTIONAL,

    aperiodicTriggeringOffset INTEGER (0..6) //time slot offset between a non-periodic NZP-CSI-RS resource and a DCI location OPTIONAL,

    trs-Info ENUMERATED {true} //which indicates whether resources are sent through a same antenna port OPTIONAL,

    ...,
}

NZP-CSI-RS-Resource-Repeater ::= SEQUENCE {//relay non-zero power CSI-RS resource configuration information

    nzp-CSI-RS-ResourceId NZP-CSI-RS-ResourceId, //non-zero power CSI-RS resource index

    resourceMapping CSI-RS-ResourceMapping, //resource mapping information

    periodicityAndOffset CSI-ResourcePeriodicityAndOffset// periodicity and time offset in the periodicity OPTIONAL,

    qcl-InfoPeriodicCSI-RS-MT TCI-StateId //QCL information of a

network device beam

    qcl-InfoPeriodicCSI-RS-backhaul        BH-Beam-Index //QCL information of a

relay device backhaul side beam

    qcl-InfoPeriodicCSI-RS-access        Beam-Index //QCL information of a

relay device access side beam

    amplificationGain        Repeater-Gain //signal amplification

gain

    OPTIONAL,

      …

    }

Optionally, in this embodiment of this application, the network device beam, the relay device access side beam, and the relay device backhaul side beam may be separately configured by using different first signaling. For example, beam information in the first signaling only includes network device beam information, and the first signaling may be used for configuring the network device beam. The beam information in the first signaling only includes relay device access side beam information, and the first signaling may be used for configuring the relay device access side beam. The beam information in the first signaling only includes relay device access side beam information, and the first signaling may be used for configuring the relay device access side beam.

Optionally, in this embodiment of this application, relay device backhaul side beams of all resources in the first forwarding resource set may be preconfigured to be a same beam, and the relay device may receive or forward a signal by using the preconfigured relay device backhaul side beam by default. In this way, the first signaling may not include the QCL information of the relay device backhaul side beam, and the first signaling may not indicate the relay device backhaul side beam.

In the foregoing step 702:

Optionally, the second signaling may include a fourth indication field, and the fourth indication field may indicate an activation operation or a deactivation operation. The relay device may first determine a function of the second signaling based on the fourth indication field in the second signaling.

In a possible implementation, the fourth indication field may separately indicate the activation operation or the deactivation operation by using different values. For example, a length of the fourth indication field may be 1 bit, and a bit value "0" or "1" may indicate to perform the activation or the deactivation operation.

Optionally, the second signaling may further include a fifth indication field, and the fifth indication field may be used for carrying an index or an identifier of a forwarding resource set. The relay device may determine, based on the fifth indication field in the second signaling, the first forwarding resource set to be activated or deactivated by using the second signaling. For example, the second signaling indicates the first forwarding resource set, and the fifth indication field may carry the index or the identifier of the first forwarding resource set.

Optionally, the second signaling may further include a sixth indication field, and the sixth indication field may be used for carrying a passband identifier (passband ID). The passband identifier may indicate information such as frequency information, a component carrier (component carrier, CC) location, bandwidth part (bandwidth part, BWP) information, and a serving cell index (serving cell ID) of a resource.

Optionally, the fourth indication field, the fifth indication field, and the sixth indication field may be located in header bytes of the second signaling.

Optionally, a length of bytes occupied by the fourth indication field is relatively short. To save a communication resource, the fourth indication field and the fifth indication field or the sixth indication field may be designed in a same byte. For example, the fourth indication field and the fifth indication field are designed in a same byte, and the sixth indication field is independently located in one byte. Alternatively, the fourth indication field and the sixth indication field are designed in a same byte, and the fifth indication field is independently located in one byte. It should be understood that the fourth indication field, the fifth indication field, and the sixth indication field may alternatively be designed in another manner in the second signaling, and all possible design manners fall within the protection scope of this application.

Optionally, the second signaling may include a plurality of first indication fields. An $i^{th}$ first indication field in the plurality of first indication fields indicates a relay device access side beam of an $i^{th}$ forwarding resource in the at least one forwarding resource included in the first forwarding resource set, and i is a positive integer. In other words, the first indication field may be in one-to-one correspondence with the forwarding resource in sequence. For example, if the first forwarding resource set includes A forwarding resources, the second signaling includes A first indication fields. The A first indication fields in the first signaling are sequentially in one-to-one correspondence with the A forwarding resources, and A is a positive integer. Based on this, different forwarding resources in the first forwarding resource set correspond to different relay device access side beams, so that signals corresponding to different forwarding resources in the first forwarding resource set are forwarded by using different relay device access side beams.

In a possible implementation, the $i^{th}$ first indication field in the second signaling may be used for carrying an index of the relay device access side beam of the $i^{th}$ forwarding resource in the first forwarding resource set. Optionally, the index of the relay device access side beam may indicate a QCL relationship between relay device access side beams, and the QCL relationship may be used for determining the relay device access side beam.

For example, the first forwarding resource set includes M forwarding resources. FIG. 8 is a diagram of second signaling. As shown in FIG. 8, the second signaling may include M first indication fields, and the M first indication fields may be respectively used for carrying indexes of relay device access side beams of the M forwarding resources in the first forwarding resource set. The indexes of the relay device access side beams carried in the M first indication fields may be in one-to-one correspondence with the M forwarding resources in the first forwarding resource set in sequence, and the relay device access side beams indicated by the M first indication fields are respectively used for forwarding signals corresponding to the M forwarding resources.

Optionally, the second signaling may further include at least one first type field, each first type field corresponds to one or more first indication fields, and each first type field indicates that a type of an index carried in the one or more first indication fields corresponding to the first type field is a relay device access side beam index.

Optionally, the second signaling may further include a second indication field corresponding to X first indication fields. The X first indication fields indicate relay device access side beams of X forwarding resources, the second indication field indicates relay device backhaul side beams of the X forwarding resources, and the relay device backhaul side beams of the X forwarding resources are the same.

Optionally, the second signaling may include one or more second indication fields, and quantities of first indication fields corresponding to different second indication fields may be the same or different. A value of X is not a fixed value, and that each second indication field corresponds to a same quantity of first indication fields is not limited in this application. This is uniformly described herein.

Optionally, if the second signaling includes only one second indication field, it indicates that relay device backhaul side beams of all resources in the first forwarding resource are the same.

For example, the second signaling may include A first indication fields and B second indication fields, and one of the B second indication fields may correspond to C first indication fields in the A first indication fields. B and C are positive integers, and C is less than or equal to A. In this way, signals that correspond to the C forwarding resources and that are indicated by the C first indication fields may be received by using a relay device backhaul side beam indicated by the second indication field corresponding to the C first indication fields. Optionally, if C is equal to A, B is equal to 1. All resources in the first forwarding resource set correspond to a same relay device backhaul side beam. If C is less than A, B is greater than or equal to 2. All resources in the first forwarding resource set correspond to two or more relay device backhaul side beams.

In a possible implementation, the first indication field and the second indication field that have a correspondence are consecutively arranged in the second signaling, so that the relay device can intuitively determine the correspondence between the first indication field and the second indication field.

For example, the first forwarding resource set includes M forwarding resources. FIG. 9 is a diagram of second signaling. As shown in FIG. 9, the second signaling may include one second indication field and M first indication fields, and the M first indication fields are immediately after the second indication field. The M first indication fields may be in one-to-one correspondence with the M forwarding resources in the first forwarding resource set in sequence, and relay device access side beams indicated by the M first indication fields are respectively used for forwarding signals corresponding to the M forwarding resources. In addition, the signals corresponding to the M forwarding resources may be received by using a relay device backhaul side beam indicated by the second indication field.

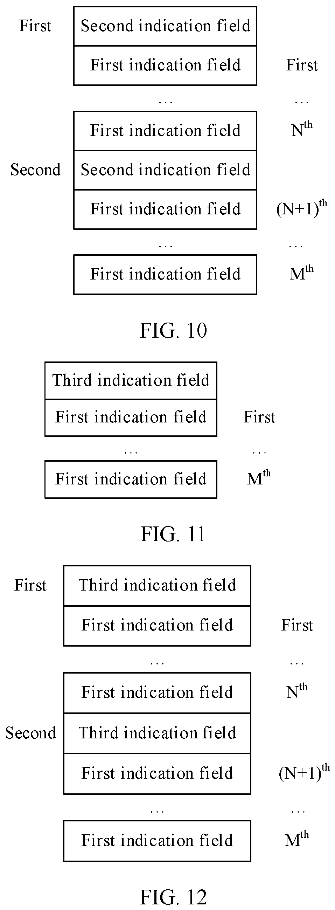

For another example, the first forwarding resource set includes M forwarding resources. FIG. 10 is a diagram of second signaling. As shown in FIG. 10, the second signaling may include two second indication fields and M first indication fields. $1^{st}$ to $N^{th}$ first indication fields are immediately after a $1^{st}$ second indication field, and $(N+1)^{th}$ to $M^{th}$ first indication fields are immediately after a $2^{nd}$ second indication field. The M first indication fields may be in one-to-one correspondence with the M forwarding resources in the first forwarding resource set in sequence, and relay device access side beams indicated by the M first indication fields are respectively used for forwarding signals corresponding to the M forwarding resources. Because the $1^{st}$ to the $N^{th}$ first indication fields correspond to the $1^{st}$ second indication field, signals corresponding to $1^{st}$ to $N^{th}$ forwarding resources in the first forwarding resource set are received or forwarded by using a relay device backhaul side beam indicated by the 1st second indication field. Because the (N+1)th to the Mth first indication fields correspond to the 2nd second indication field, signals corresponding to (N+1)th to Mth forwarding resources in the first forwarding resource set are received or forwarded by using a relay device backhaul side beam indicated by the 2nd second indication field.

In a possible implementation, the second indication field is used for carrying indexes of relay device backhaul side beams of X forwarding resources. The index of the relay device backhaul side beam may indicate a QCL relationship between relay device backhaul side beams, and the QCL relationship may be used for determining the relay device backhaul side beam.

Optionally, the second signaling may further include a second type field corresponding to the second indication field, and the second type field indicates that a type of the index carried in the second indication field is a relay device backhaul side beam index.

Optionally, the second signaling may further include a third indication field corresponding to Y first indication fields, the Y first indication fields indicate relay device access side beams of Y forwarding resources, the third indication field indicates network device beams of the Y forwarding resources, and the network device beams of the Y forwarding resources are the same.

Optionally, the second signaling may include one or more third indication fields, and quantities of first indication fields corresponding to different third indication fields may be the same or different. A value of Y is not a fixed value, and that each third indication field corresponds to a same quantity of first indication fields is not limited in this application. This is uniformly described herein.

Optionally, if the second signaling includes only one third indication field, it indicates that network device beams of all resources in the first forwarding resource are the same.

For example, the second signaling may include A first indication fields and D third indication fields, and one of the D third indication fields may correspond to C first indication fields in the A first indication fields. D and C are positive integers, and C is less than or equal to A. Therefore, signals that correspond to the C forwarding resources and that are indicated by the C first indication fields may be sent by using a network device beam indicated by the third indication field corresponding to the C first indication fields. Optionally, if C is equal to A, B is equal to 1. All resources in the first forwarding resource set correspond to a same network device beam. If C is less than A, B is greater than or equal to 2. All resources in the first forwarding resource set correspond to two or more network device beams.

In a possible implementation, the third indication field is used for carrying indexes of the network device beams of the Y forwarding resources.

Optionally, the index of the network device beam may indicate a QCL relationship between network device beams, and the QCL relationship may be used for determining the network device beam. In a possible implementation, the index of the network device beam may be a TCI state identifier, and a TCI state corresponding to the TCI state identifier may include the QCL relationship between the network device beams, so that the network device beam may be determined.

Optionally, the second signaling may further include a third type field corresponding to the third indication field, and the third type field indicates that a type of the index carried in the third indication field is a network device beam index.

In a possible implementation, the first indication field and the third indication field that have a correspondence are consecutively arranged in the second signaling, so that the relay device can intuitively determine the correspondence between the first indication field and the third indication field.

For example, the first forwarding resource set includes M forwarding resources. FIG. 11 is a diagram of second signaling. As shown in FIG. 11, the second signaling may include one third indication field and M first indication fields, and the M first indication fields are immediately after the third indication field. The M first indication fields may be in one-to-one correspondence with the M forwarding resources in the first forwarding resource set in sequence, and relay device access side beams indicated by the M first indication fields are respectively used for forwarding signals corresponding to the M forwarding resources. In addition, all signals corresponding to the M forwarding resources are sent by using a network device beam indicated by the third indication field.

For another example, the first forwarding resource set includes M forwarding resources. FIG. 12 is a diagram of second signaling. As shown in FIG. 12, the second signaling may include two third indication fields and M first indication fields. 1st to Nth first indication fields are immediately after a 1st third indication field, and (N+1)th to Mth first indication fields are immediately after a 2nd third indication field. The M first indication fields may be in one-to-one correspondence with the M forwarding resources in the first forwarding resource set in sequence, and relay device access side beams indicated by the M first indication fields are respectively used for forwarding signals corresponding to the M forwarding resources. Because the 1st to the Nth first indication fields correspond to the 1st third indication field, signals corresponding to 1st to Nth forwarding resources in the first forwarding resource set are sent by using a network device beam indicated by the 1st third indication field. Because the (N+1)th to the Mth first indication fields correspond to the 2nd third indication field, signals corresponding to (N+1)th to Mth forwarding resources in the first forwarding resource set are sent by using a network device beam indicated by the 2nd third indication field.

Optionally, the relay device may alternatively receive, by using a same backhaul side beam, a signal corresponding to each forwarding resource in the first forwarding resource set. The backhaul side beam may be preconfigured. In this case, the second signaling may not include the second indication field (for example, the second signaling shown in FIG. 11 or FIG. 12), and the second signaling may not need to indicate, to the relay device, a relay device backhaul side beam corresponding to the forwarding resource in the first forwarding resource set.

Optionally, the network device may send, by using a same network device beam, a signal corresponding to each forwarding resource in the first forwarding resource set, or the relay device may receive, by using a same backhaul side beam, the signal corresponding to each forwarding resource in the first forwarding resource set. In this case, the second signaling may not include the second indication field and the third indication field (for example, the second signaling shown in FIG. 8), and the second signaling may not need to indicate, to the relay device, a network device beam and a relay device backhaul side beam that correspond to the forwarding resource in the first forwarding resource set.

Optionally, the second signaling may alternatively include all of the first indication field, the second indication field, and the third indication field. In this case, the first indication field, the second indication field, and the third indication field having a correspondence in the second signaling are consecutively arranged. For example, it is assumed that the second signaling shown in FIG. 9 or FIG. 10 further includes the third indication field (not shown in FIG. 9 and FIG. 10), and the third indication field may be immediately before the second indication field. For another example, it is assumed that the second signaling shown in FIG. 11 or FIG. 12 further includes the second indication field (not shown in FIG. 11 or FIG. 12), and the second indication field may be located between the third indication field and a 1st first indication field after the third indication field.

Optionally, assuming that the first forwarding resource set includes M forwarding resources, the second signaling also includes M first indication fields, and the M first indication fields may carry indexes of M relay device access side beams. In a possible implementation, the relay device may determine a correspondence between the M relay device access side beams and the M forwarding resources based on index numbers of the M relay device access side beams and identifiers of the M forwarding resources. For example, a correspondence may be established based on a value relationship between index numbers and a value relationship between resource identifiers.

In this embodiment of this application, values of a length of the first type field and a length of the first indication field are not limited, and may be designed based on an actual situation. In a possible implementation, the first type field may occupy a shorter field length, and the first indication field may occupy a longer field length. For example, it is assumed that a total length of the first indication field is eight bits (bits), a length of the first type field may be one bit, and a length of the first indication field may be seven bits.

It should be understood that, for designs of the second indication field and the second type field, and designs of the third indication field and the third type field, refer to the designs of the first indication field and the first type field. Details are not described herein again.

Values of the first type field, the second type field, and the third type field are different, and type fields of different values correspond to different indication fields.

Optionally, when the second signaling includes the first indication field and the third indication field, and does not include the second indication field, lengths of the first type field and the third type field may be 1 bit. One bit may have two different bit values, so that different bit values may be used for the first type field and the third type field. A bit value of the first type field is "0", and a bit value of the third type field is "1". Alternatively, a bit value of the first type field is "1", and a bit value of the third type field is "0".

Optionally, when the second signaling includes the first indication field, the second indication field, and the third indication field, lengths of the first type field, the second type field, and the third type field need to be greater than or equal to two bits. It should be understood that one bit cannot represent three different bit values. In this case, a type field needs at least two bits.

Optionally, the second signaling may be a media access control-control element (media access control-control element, MAC-CE) or downlink control information (downlink control information, DCI).

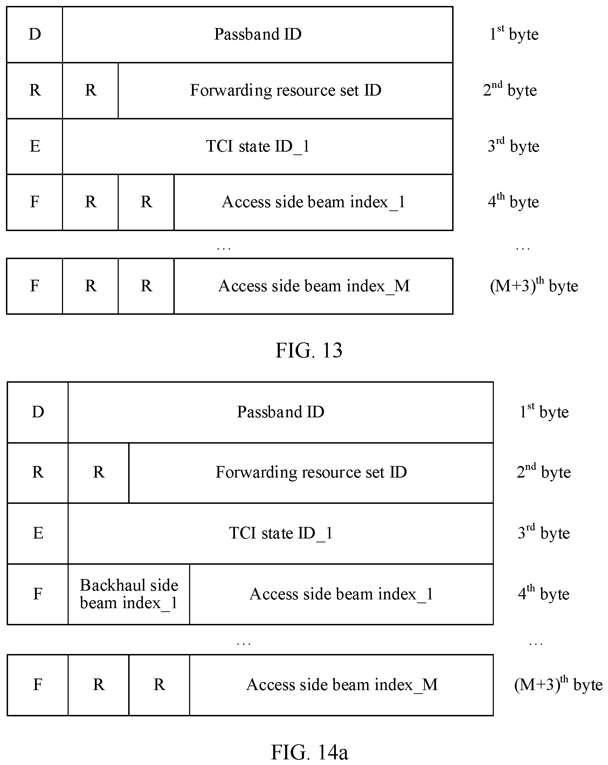

In a possible implementation, based on the possible implementations of the foregoing fields, FIG. 13 is a diagram of a format of second signaling. As shown in FIG. 13, a 1st byte of the second signaling may include a fourth indication field (represented by "D" in FIG. 13) and a sixth indication field, and the sixth indication field is used for carrying a passband ID. A 2nd byte of the second signaling includes a fifth indication field, and the fifth indication field carries a forwarding resource set ID. Fields other than the fifth indication field in the 2nd byte are reserved fields, and are represented by "R" in FIG. 13. A 3rd byte of the second signaling includes a third type field (represented by "E" in FIG. 13) and a third indication field. The third indication field is used for carrying an index of a network device beam (an example in which the third indication field carries a TCI state ID_1 is used in FIG. 13). 4th to (M+3)th bytes in the second signaling include a first type field (represented by "F" in FIG. 13), first indication fields, and other reserved bits (represented by "R" in FIG. 13), and the first indication field is used for carrying an index of a relay device access side beam. As shown in FIG. 13, the first indication fields in the 4th to the (M+3)th bytes are respectively used for carrying a relay device access side beam index_1 to a relay device access side beam index_M. The relay device access side beam index_1 to the relay device access side beam index_M sequentially correspond to M forwarding resources in a forwarding resource set.

Based on the second signaling shown in FIG. 13, because the relay device access side beam index_1 to the relay device access side beam index_M are immediately after the TCI state ID_1, the relay device may determine that signals corresponding to M forwarding resources indicated by the relay device access side beam index_1 to the relay device access side beam index_M may be sent or received by using the network device beam indicated by the TCI state ID_1.

In a possible implementation, based on the possible implementations of the foregoing fields, FIG. 14a is a diagram of a format of second signaling. The second signaling shown in FIG. 14a is similar to the second signaling shown in FIG. 13, and a difference lies in that a 4th byte of the second signaling shown in FIG. 14a further includes a second indication field that carries a relay device backhaul side beam index, where the second indication field carries a backhaul side beam index_1. Other bytes in FIG. 14a are the same as those in FIG. 13. For details, refer to related descriptions in FIG. 13. A location relationship between the second indication field (a field that carries the backhaul side beam index_1 in FIG. 14a) and a first indication field (a field that carries a relay device access side beam index_1 in FIG. 14a) shown in FIG. 14a is merely an example, and there may be another design manner. For example, a location of the second indication field and a location of the first indication field are exchanged.

Based on the second signaling shown in FIG. 14a, because a TCI state ID_1, the backhaul side beam index_1, and the access side beam index_1 to an access side beam index_M are sequentially arranged, the relay device may determine that signals corresponding to M forwarding resources indicated by the relay device access side beam index_1 to the relay device access side beam index_M may be sent by using a network device beam indicated by the TCI state ID_1, and may be received by using a relay device backhaul side beam indicated by the backhaul side beam index_1. Alternatively, signals corresponding to M forwarding resources indicated by the relay device access side beam index_1 to the relay device access side beam index_M may be forwarded by using a relay device backhaul side beam indicated by the backhaul side beam index_1, and received by using a network device beam indicated by the TCI state ID_1.

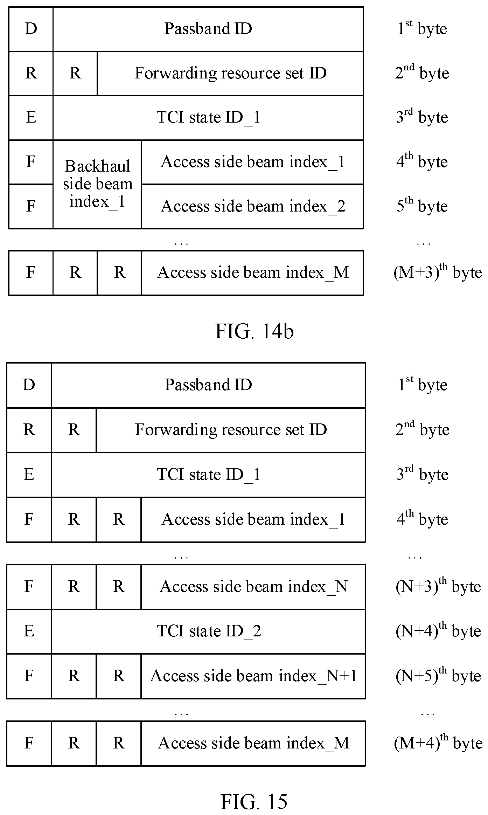

In another possible implementation, when the second signaling includes the second indication field, the second indication field may be jointly implemented by using some bits in a plurality of bytes. For example, FIG. 14b is a diagram of a format of second signaling. The second signaling shown in FIG. 14b is similar to the second signaling shown in FIG. 14a. A difference lies in that a second indication field is jointly implemented by a plurality of bits at adjacent locations in a 4th byte and a 5th byte. It should be understood that FIG. 14b is merely an implementation, and the second indication field may alternatively occupy bits in more bytes.

In a possible implementation, based on the possible implementations of the foregoing fields, FIG. 15 is a diagram of another format of second signaling. The second signaling shown in FIG. 15 is similar to the second signaling shown in FIG. 13, and a difference lies in that the second signaling shown in FIG. 15 includes two third indication fields (which are respectively located in a 3rd byte and an (N+4)th byte), and network device beam indexes carried in the two third indication fields are respectively a TCI state ID_1 and a TCI state ID_2. Still refer to FIG. 15. First indication fields that carry a relay device access side beam index_1 to a relay device access side beam index_N are located in a 4th byte to an (N+3)th byte, and the N relay device access side beam indexes are immediately after the TCI state ID_1. First indication fields that carry a relay device access side beam index_N+1 to a relay device access side beam index_M are located in an (N+5)th byte to an (M+4)th byte, and the N relay device access side beam indexes are immediately after the TCI state ID_2.

Structures of the first three bytes in FIG. 15 are the same as structures of the first three bytes in FIG. 13. For details, refer to descriptions of the first three bytes in FIG. 13. Structures of the 3rd byte and the (N+4)th byte in FIG. 15 are the same as a structure of the 3rd byte in FIG. 13. For details, refer to descriptions of the 3rd byte in FIG. 13. Structures of the 4th byte to the (N+3)th byte and the (N+5)th byte to the (M+4)th byte in FIG. 15 are the same as those of the 4th byte to the (M+3)th byte in FIG. 13. For details, refer to descriptions of the 4th byte to the (M+3)th byte in FIG. 13.

Based on the second signaling shown in FIG. 15, the relay device may determine that signals corresponding to N forwarding resources indicated by the relay device access side beam index_1 to the relay device access side beam index_N may be sent or received by using a network device beam indicated by the TCI state ID_1. In addition, signals corresponding to (M-N) forwarding resources indicated by the relay device access side beam index_N+1 to the relay device access side beam index_M may be sent or received by using a network device beam indicated by the TCI state ID_2.

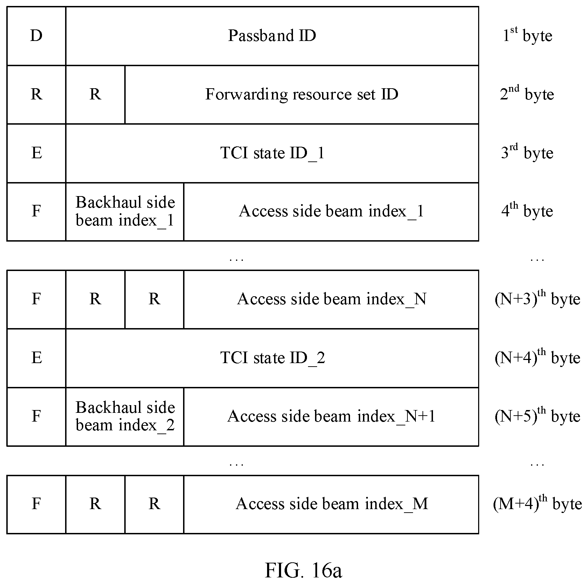

In a possible implementation, based on the possible implementations of the foregoing fields, FIG. 16a is a diagram of another format of second signaling. The second signaling shown in FIG. 16a is similar to the second signaling shown in FIG. 15, and a difference lies in that a 4th byte and an (N+5)th byte of the second signaling shown in FIG. 16a further include second indication fields that carry relay device backhaul side beam indexes. The second indication field in the 4th byte carries a backhaul side beam index_1, and the second indication field in the (N+5)th byte carries a relay device backhaul side beam index_2. Other bytes in FIG. 16a are the same as those in FIG. 15. For details, refer to related descriptions in FIG. 15. A location relationship between the second indication field and a first indication field shown in FIG. 16a is merely an example, and there may be another design manner. For example, a location of the second indication field and a location of the first indication field may be exchanged.

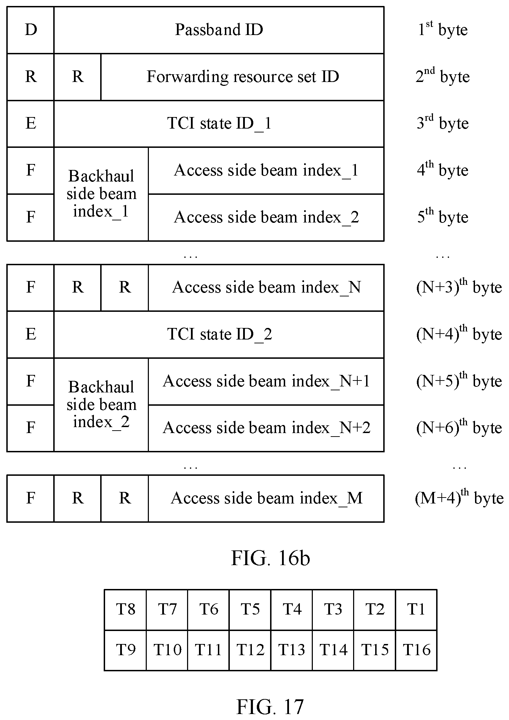

In another possible implementation, when the second signaling includes the second indication field, the second indication field may be jointly implemented by using some bits in a plurality of bytes. For example, FIG. 16b is a diagram of a format of second signaling. The second signaling shown in FIG. 16b is similar to the second signaling shown in FIG. 16a, and a difference lies in that a second indication field that carries a backhaul side beam index_1 may be jointly implemented by a plurality of bits at adjacent locations in a 4th byte and a 5th byte, and a second indication field that carries a backhaul side beam index_2 may be jointly implemented by a plurality of bits at adjacent locations in an (N+5)th byte and an (N+6)th byte. It should be understood that FIG. 16b is merely an implementation, and the second indication field may alternatively occupy bits in more bytes.

That the second signaling directly carries an index of a beam corresponding to a forwarding resource may be considered as an explicit indication manner.

Optionally, in this embodiment of this application, before step 702, the network device may divide indexes of a plurality of relay device access side beams into at least one index set, where each index set includes at least one beam index, and a beam index in the index set is the index of the relay device access side beam. Different index sets may include different relay device access side beam indexes, and quantities of relay device access side beams included in different index sets may be the same or different. A total quantity of relay device access side beam indexes included in the at least one index set does not exceed a maximum capability value of the relay device access side beam.

In a possible implementation, a quantity of indexes included in an index set may be 8, 16, 32, or the like. It should be understood that, when the indexes of the plurality of relay device access side beams are divided, a quantity of indexes in one index set may be less than that in another index set.

For example, a total of 30 relay device access side beam indexes are included. According to a standard that each index set includes 16 indexes, the 30 relay device access side beam indexes may be divided into two index sets, a 1st index set may include 16 indexes, and a 2nd index set value may include only 14 indexes. The two index sets may be shown as follows:

Index set 1 {a relay device access side beam index_1, ..., a relay device access side beam index_16}
Index set 1 {a relay device access side beam index_1, ..., a relay device access side beam index_14}

Optionally, before step 702, the method may further include: step 707: The network device sends third signaling to the relay device, where the third signaling may include at least one index set. The at least one index set in the third signaling is obtained by dividing the indexes of the plurality of relay device access side beams in the network device.

The network device sends the third signaling to the relay device, so that the relay device can learn of the plurality of relay device access side beam indexes, and may determine the relay device access side beams corresponding to the plurality of relay device access side beam indexes. In addition, the relay device may also learn of a correspondence between each relay device access side beam index and an index set.

Optionally, beam indexes in the index set may be in one-to-one correspondence with identifiers of forwarding resources in the relay device. In other words, relay device access side beams corresponding to beam indexes in the index set is in one-to-one correspondence with the forwarding resources in the relay device.

Optionally, when the network device configures the index set for the relay device, the second signaling may not carry an index of a relay device access side beam of the forwarding resource, but indicates, by using a field, that the relay device access side beam index in the index set belongs to the index of the relay device access side beam corresponding to the forwarding resource.

Optionally, the second signaling may include a seventh indication field, and the seventh indication field may correspond to a first index set in the at least one index set.

Optionally, the seventh indication field may include at least one piece of bit information, and the at least one piece of bit information may be used for activating a relay device access side beam corresponding to the first index set. The relay device access side beam corresponding to the first index set is a relay device access side beam indicated by a beam index in the first index set. In the relay device access side beam corresponding to the first index set, an activated relay device access side beam is to be a relay device access side beam of a forwarding resource, and a signal is forwarded by using the corresponding forwarding resource based on the activated relay device access side beam.

In a possible implementation, the seventh indication field may include at least one indication bit, the at least one bit carries at least one piece of bit information, and the at least one piece of bit information is used for activating the relay device access side beam corresponding to the first index set. If a kth piece of bit information in the at least one piece of bit information is a first value (for example, a value is "1"), a relay device access side beam corresponding to a kth beam index in the first index set is activated.

For example, FIG. 17 is a diagram of a structure of a seventh indication field. A length of the seventh indication field may be 2 bytes (16 bits in total), the length of the seventh indication field may include 16 indication bits (T1 to T16), an index set corresponding to the seventh indication field may include 16 relay device access side beam indexes, and T1 to T16 respectively correspond to the 16 relay device access side beam indexes. An index corresponding to an indication bit whose value is the first value and that is in T1 to T16 may be considered as an index of a relay device access side beam of the forwarding resource.

Optionally, an index of a relay device access side beam of at least one forwarding resource in the first forwarding resource set may be located in a plurality of index sets. Therefore, the second signaling may include at least one seventh indication field. Assuming that the first forwarding resource set includes M forwarding resources, values of M indication bits (that is, M pieces of bit information) in a plurality of seventh indication fields are the first value.

Optionally, M relay device access side beams corresponding to the at least one index set may be activated by using the second signaling based on the M indication bits (that is, the M pieces of bit information), and the M activated relay device access side beams may sequentially correspond to the M forwarding resources based on sequence numbers of beam indexes.

Optionally, the second signaling may further include an eighth indication field associated with the seventh indication field, and the eighth indication field indicates an identifier of an index set corresponding to the seventh indication field. An index of the relay device access side beam can be further determined based on the seventh indication field only after the index set corresponding to the seventh indication field is determined.

Optionally, the second signaling may further include a ninth indication field, and the ninth indication field may indicate whether a quantity of network device beams of the at least one forwarding resource included in the first forwarding resource set is one or more. The ninth indication field may indicate the foregoing two different cases by using different values.

Optionally, in an implementation in which the network device configures the index set, the second signaling may also include at least one of the second indication field, the third indication field, the fourth indication field, the fifth indication field, and the sixth indication field.

Optionally, when the second signaling includes the third indication field, each seventh indication field may correspond to one third indication field, and the seventh indication field and the third indication field corresponding to the seventh indication field may be located in consecutive adjacent bytes. Network device beams indicated by third indication fields corresponding to different seventh indication fields may be the same or different. To be specific, indexes of network device beams carried in third indication fields corresponding to different seventh indication fields may be the same or may be different.

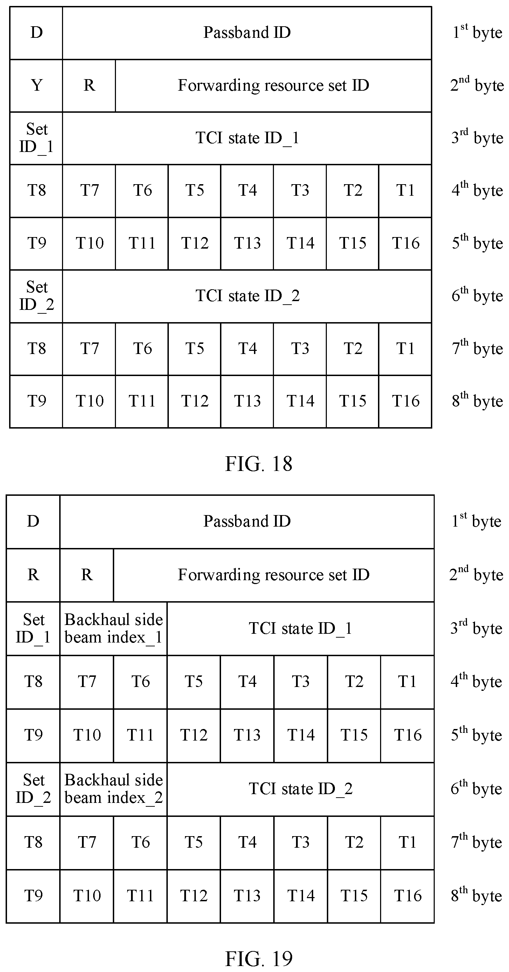

In a possible implementation, FIG. 18 is a diagram of a structure of second signaling. As shown in FIG. 18, a 1st byte of the second signaling may include a fourth indication field (represented by "D" in FIG. 18) with a length of one bit and a sixth indication field with a length of seven bits, and the sixth indication field is used for carrying a passband ID. A 2nd byte of the second signaling may include a ninth indication field (represented by Y in FIG. 18) with a length of one bit, a 1-bit reserved field (represented by "R" in FIG. 18), and a fifth indication field with a length of six bits, and the fifth indication field carries a forwarding resource set ID. A 3rd byte of the second signaling may include an eighth indication field with a length of one bit and a third indication field with a length of seven bits. The eighth indication field is used for carrying an identifier of a beam index set (such as a set ID_1 shown in FIG. 18), and the third indication field is used for carrying an index of a network device beam (such as a TCI state ID_1 shown in FIG. 18). 4th and 5th bytes of the second signaling are a seventh indication field. The seventh indication field includes 16 indication bits T1 to T16 in total, and may indicate 16 relay device access side beam indexes in the index set corresponding to the set ID_1. A 6th byte of the second signaling may include an eighth indication field with a length of one bit and a third indication field with a length of seven bits. The eighth indication field is used for carrying an identifier of a beam index set (such as a set ID_2 shown in FIG. 18), and the third indication field is used for carrying an index of a network device beam (such as a TCI state ID_2 shown in FIG. 18). 7th and 8th bytes of the second signaling are a seventh indication field. The seventh indication field includes 16 indication bits T1 to T16 in total, and may indicate 16 relay device access side beam indexes in the index set corresponding to the set ID_2.

In the second signaling shown in FIG. 18, the TCI state ID_1 and indexes of relay device access side beams indicated by the seventh indication field in the 4th and the 5th bytes are associated, and the TCI state ID_2 and indexes of relay device access side beams indicated by the seventh indication field in the 7th and the 8th bytes are associated.

In the second signaling shown in FIG. 18, the set ID_1 is different from the set ID_2, and the TCI state ID_1 and the TCI state ID_2 may be the same or different. When the ninth indication field indicates that there is one network device beam of the at least one forwarding resource in the first forwarding resource set, the TCI state ID_1 is the same as the TCI state ID_2. When the ninth indication field indicates that there are a plurality of network device beams of the at least one forwarding resource in the first forwarding resource set, the TCI state ID_1 is different from the TCI state ID_2.

Optionally, when the second signaling includes the second indication field, each seventh indication field may correspond to one second indication field, and the seventh indication field and the second indication field corresponding to the seventh indication field may be located in consecutive adjacent bytes. Relay device backhaul side beams indicated by second indication fields corresponding to different seventh indication fields may be the same or different. To be specific, indexes of relay device backhaul side beams carried in second indication fields corresponding to different seventh indication fields may be the same or may be different.

In a possible implementation, FIG. 19 is a diagram of a structure of second signaling. A result of the second signaling shown in FIG. 19 is similar to that of the second signaling shown in FIG. 18, and a difference lies only in that a 3rd byte and a 6th byte of the second signaling shown in FIG. 19 further include second indication fields, and the second indication field is used for carrying an index of a network device backhaul side beam. As shown in FIG. 19, a second indication field in the 3$^{rd}$ byte of the second signaling carries a backhaul side beam index_1, and a second indication field in the 6$^{th}$ byte of the second signaling carries a backhaul side beam index_2. For other fields in the second signaling shown in FIG. 19, refer to descriptions in FIG. 18.

In the second signaling shown in FIG. 19, a TCI state ID_1, the backhaul side beam index_1, and indexes of relay device access side beams indicated by a seventh indication field in 4$^{th}$ and 5$^{th}$ bytes are associated, and a TCI state ID_2, the backhaul side beam index _2, and indexes of relay device access side beams indicated by a seventh indication field in 7$^{th}$ and 8$^{th}$ bytes are associated.

As shown in FIG. 19, a 1$^{st}$ byte of the second signaling may include a fourth indication field (represented by "D" in FIG. 19) with a length of one bit and a sixth indication field with a length of seven bits, and the sixth indication field is used for carrying a passband ID. A 2$^{nd}$ byte of the second signaling may include two reserved fields (represented by "R" in FIG. 19) with a length of one bit and a fifth indication field with a length of six bits, and the fifth indication field is used for carrying a forwarding resource set ID. A 3$^{rd}$ byte of the second signaling may include an eighth indication field with a length of one bit and a third indication field with a length of seven bits. The eighth indication field is used for carrying an identifier of a beam index set (such as a set ID_1 shown in FIG. 19), and the third indication field is used for carrying an index of a network device beam (such as a TCI state ID_1 shown in FIG. 19). 4$^{th}$ and 5$^{th}$ bytes of the second signaling are a seventh indication field. The seventh indication field includes 16 indication bits T1 to T16 in total, and may indicate 16 relay device access side beam indexes in the index set corresponding to the set ID_1. The 6$^{th}$ byte of the second signaling may include an eighth indication field with a length of one bit and a third indication field with a length of seven bits. The eighth indication field is used for carrying an identifier of a beam index set (such as a set ID_2 shown in FIG. 19), and the third indication field is used for carrying an index of a network device beam (such as a TCI state ID_2 shown in FIG. 19). The 7$^{th}$ and the 8$^{th}$ bytes of the second signaling are a seventh indication field. The seventh indication field includes 16 indication bits T1 to T16 in total, and may indicate 16 relay device access side beam indexes in the index set corresponding to the set ID_2.

In a possible implementation, in the second signaling shown in FIG. 19, the set ID_1 and the set ID_2 may correspond to a same index set, and the TCI state ID_1 and the TCI state ID_2 may correspond to different network device beams. This means that a plurality of activated relay device access side beams corresponding to a same index set may correspond to different network device beams.

Optionally, a manner in which the second signaling indicates the index of the relay device access side beam by using the seventh indication field may be considered as an implicit indication manner.

Optionally, in this embodiment of this application, relay device backhaul side beams of all resources in the first forwarding resource set may be configured as a same beam by using the first signaling. Therefore, the second signaling may not indicate the relay device backhaul side beam.

Optionally, in this embodiment of this application, relay device access side beams of all resources in the first forwarding resource set may be configured as a same beam by using the first signaling. Therefore, the second signaling may not indicate a relay device access side beam.

Optionally, in this embodiment of this application, network device beams of all resources in the first forwarding resource set may be configured as a same beam by using the first signaling. Therefore, the second signaling may not indicate the network device beam.

Optionally, in this embodiment of this application, signal transmission may also be performed between the network device and the relay device, so that the first signaling may be further used for configuring a first transmission resource set for the relay device. The first transmission resource set includes at least one transmission resource, and the transmission resource is used for the signal transmission between the network device and the relay device. The following uses a transmission resource in the first transmission resource set as an example for description.

Optionally, the first signaling may further indicate a beam of a transmission resource, and the beam of the transmission resource may include network device beam and a relay device backhaul side beam.

Optionally, the beam of the transmission resource indicated by the first signaling is different from a beam of a forwarding resource. For example, the network device beam of the transmission resource is different from a network device beam of the forwarding resource. Therefore, a signal transmitted between the network device and the terminal device and a signal transmitted between the network device and the relay device may be transmitted by using different network device beams.

Optionally, some beams of the transmission resources may be the same as beams of the forwarding resources. For example, a first network device beam may be a network device beam of the forwarding resource, and may be further a network device beam of the transmission resource. Therefore, the first network device beam may be used for transmitting a signal transmitted between the network device and the terminal device, and may be further used for transmitting a signal transmitted between the network device and the relay device.

Optionally, the first transmission resource set and the first forwarding resource set may be a same resource set, or may be different resource sets.

Optionally, the second signaling may be further used for activating a transmission resource configured by using the first signaling for the relay device and a beam of the transmission resource.

Optionally, the second signaling may further include a tenth indication field, and the tenth indication field may be used for carrying an index of a network device beam of the transmission resource. In a possible implementation, the index of the network device beam of the transmission resource may also be a TCI state ID.

Optionally, if network device beams of all transmission resources are preconfigured as a same beam, or network device beams of all transmission resources are configured as a same beam by using the first signaling, the second signaling may not indicate the network device beam of the transmission resource.

Optionally, the second signaling may further include an eleventh indication field, and the eleventh indication field may be used for carrying an index of a relay device backhaul side beam of the transmission resource.

Optionally, in this embodiment of this application, relay device backhaul side beams of all resources in the first forwarding resource set may be configured as a same beam by using the first signaling. Therefore, the second signaling may not indicate the relay device backhaul side beam.

In a possible implementation, the tenth indication field and/or the eleventh indication field may be located at an end byte of the second signaling. For example, the second signaling shown in FIG. 13, FIG. 14, FIG. 15, or FIG. 16 is used as an example. The tenth indication field and/or the eleventh indication field may be located in a byte following the access side beam index_M. The second signaling shown in FIG. 18 or FIG. 19 is used as an example. The tenth indication field and/or the eleventh indication field may be located in a byte following the seventh indication field corresponding to the set ID_2.

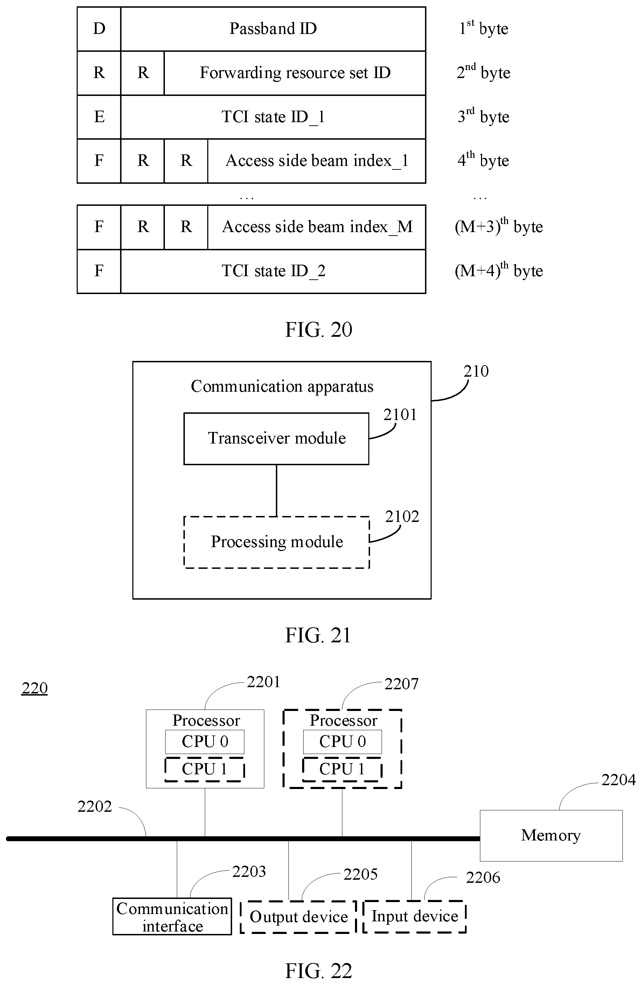

For example, the second signaling further includes a tenth indication field. FIG. 20 is a diagram of second signaling. $1^{st}$ to $(M+3)^{th}$ bytes of the second signaling shown in FIG. 20 are the same as those of the second signaling shown in FIG. 13, and a difference lies in that an $(M+4)^{th}$ byte of the second signaling shown in FIG. 20 further includes a tenth indication field, and the tenth indication field carries a network device beam (TCI state IC_2) of a transmission resource. The network device beam corresponding to the TCI state IC_2 is used for sending or receiving a signal corresponding to the transmission resource. Network device beams corresponding to the TCI state IC_2 and a TCI state IC_1 are used for different resources.

In this embodiment of this application, a beam of the transmission resource configured by the network device for the relay device may be used for beam measurement and beam management between the network device and the relay device.

Optionally, in this embodiment of this application, a relay device access side beam may also be indicated by using a TCI state, so that the terminal device may consider the relay device access side beam as the network device beam, so that the terminal device does not perceive existence of the relay device side. Therefore, according to this solution, no additional interference is caused to an existing terminal device, and this solution is of good applicability.

Optionally, after step 702, the method may further include: step 703: A first device sends the signal corresponding to the at least one forwarding resource, and the relay device forwards the signal to a second device based on the beam of the at least one forwarding resource. The first device is a network device, and the second device is a terminal device. Alternatively, the first device is a terminal device, and the second device is a network device.

Optionally, before step 703 is performed, resources that are the same as or similar to the forwarding resource may be configured for the network device and the terminal device, and these resources have been activated. The network device may send a signal on these resources, and the terminal device may receive the signal on these resources.

Optionally, the relay device activates at least one of the following beams by using the second signaling: a network side beam, a relay backhaul side beam, and an access side beam; activates at least one forwarding resource in the first forwarding resource set by using the second signaling; and performs signal transmission on the at least one activated forwarding resource. Specifically, at least one of the following is included: A signal is sent by using a network device beam, the signal is received by using a relay device backhaul side beam, the signal is forwarded to the terminal device by using a relay device access side beam, and the terminal device receives the signal.

Optionally, before step 703 is performed, resources that are the same as or similar to the forwarding resource may be configured for the network device and the terminal device, and these resources are also activated. The terminal device sends a signal on these resources, and the network device may receive the signal on these resources.

Optionally, the relay device activates at least one of the following beams by using the second signaling: a network side beam, a relay backhaul side beam, and an access side beam; activates at least one forwarding resource in the first forwarding resource set by using the second signaling; and may perform signal transmission on the at least one activated forwarding resource. Specifically, at least one of the following is included: The terminal device sends a signal, the signal is received by using a relay device access side beam, the signal is forwarded to the network device by using a relay device backhaul side beam, and the signal is received by using a network side beam.

For example, it is assumed that the first forwarding resource set includes three forwarding resources: a resource X, a resource Y, and a resource Z. The communication system shown in FIG. 2 is used as an example. A network device beam of the resource X may be the beam a1, a relay device backhaul side beam of the resource X may be the beam b1, and a relay device access side beam of the resource X may be the beam c1. A network device beam of the resource Y may be the beam a1, a relay device backhaul side beam of the resource Y may be the beam b1, and a relay device access side beam of the resource Y may be the beam c2. A network device beam of the resource Z may be the beam a2, a relay device backhaul side beam of the resource Z may be the beam b2, and a relay device access side beam of the resource Z may be the beam c3. Based on this, the network device may send, by using the beam a1, signals corresponding to the resource X and the resource Y, and send, by using the beam a2, a signal corresponding to the resource Z. The relay device may receive, by using the beam b1, the signals corresponding to the resource X and the resource Y, and receive, by using the beam b2, the signal corresponding to the resource Z. In addition, the relay device may forward, by using the beam c1, the resource X to the terminal device, forward, by using the beam c2, the signal corresponding to the resource Y to the terminal device, and forward, by using the beam c3, the signal corresponding to the resource Z to the terminal device.

Optionally, before step 701, the method may further include step 704: The relay device reports capability information to the network device.

It should be understood that the relay device reports the capability information to the network device, so that the network device configures a resource that matches a capability of the relay device, and the resource does not exceed a maximum forwarding capability of the relay device.

Optionally, the capability information of the relay device may include beam capability information of the relay device. The network device may determine, based on the beam capability information of the relay device, a beam of the forwarding resource configured for the relay device. Optionally, a quantity of beams of the at least one forwarding resource that are configured by using the first signaling does not exceed a quantity of beams indicated by the beam capability information of the relay device.

The beam capability information of the relay device may include capability information of an access side beam. The access side beam may include one or more beam sets, and each beam set may include one or more beam subsets (or beam groups). The capability information of the access side beam may include at least one of beam quantity information, an index, or QCL information in the access side beam set.

The beam capability information of the relay device may include capability information of a backhaul side beam. The capability information of the backhaul side beam is similar to the capability information of the access side beam. For details, refer to the descriptions of the capability information of the access side beam. Details are not described herein again.

Optionally, after step 703, step 705 and step 706 may be further included.

Step 705: The terminal device measures the received signal.

When receiving the signal, the terminal device may perform receiving processing (also referred to as measurement), to obtain a measurement result of the signal.

Step 706: The terminal device sends the measurement result of the signal to the relay device, and the relay device forwards the measurement result of the signal to the network device.

The measurement result of the signal may include at least one of the following parameters: a channel quality indicator (channel quality indicator, CQI), a reference signal received power (reference signal received power, RSRP), reference signal received quality (reference signal received quality, RSRQ), received signal strength indicator (received signal strength indicator, RSSI), a precoding matrix indicator (precoding matrix indicator, PMI), a transmitted precoding matrix indicator (transmitted precoding matrix indicator, TPMI), a rank indicator (rank indicator, RI), and a layer indicator (layer indicator, LI).

Optionally, if the first forwarding resource set is a CSI-RS resource set, and the signal received by the terminal device is a CSI-RS, the measurement result sent by the terminal device may further include a channel measurement forwarding resource index (CSI-RS index, CRI).

Based on step 705 and step 706, the terminal device may perform measurement based on the signal forwarded by the relay device, and report the measurement result to the network device. In this way, the network device can determine, based on the measurement result of the signal, a status of a beam corresponding to each signal, so that a beam used for communication between the network device and the terminal device can be optimized.

Optionally, an embodiment of this application further provides a communication apparatus. The communication apparatus may be configured to implement the foregoing methods. The communication apparatus may be the relay device in the foregoing method embodiments, or an apparatus including the relay device, or a component that can be used in the relay device. The communication apparatus may alternatively be the network device in the foregoing method embodiments, or an apparatus including the foregoing network device, or a component that can be used in the network device. The communication apparatus may alternatively be the terminal device in the foregoing method embodiments, or an apparatus including the foregoing terminal device, or a component that can be used in the terminal device. It may be understood that, to implement the foregoing functions, the communication apparatus includes a hardware structure and/or a software module for performing the functions. A person skilled in the art should easily be aware that, with reference to units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes outside the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in the form of hardware, or may be implemented in the form of a software functional module. It should be noted that, in embodiments of this application, module division is an example, and is merely a logical function division. In actual implementation, another division manner may be used.

FIG. 21 is a diagram of a structure of a communication apparatus 210. The communication apparatus 210 includes a transceiver module 2101. The transceiver module 2101 may also be referred to as a transceiver unit, and is configured to implement a transceiver function, for example, may be a transceiver circuit, a communication interface, a transceiver, or an antenna. Optionally, the communication apparatus 210 may further include a processing module 2102.

For example, the communication apparatus 210 is the relay device in the foregoing method embodiment.

The transceiver module 2101 may be configured to receive first signaling, where the first signaling is used for configuring a first forwarding resource set, and the first forwarding resource set includes at least one forwarding resource. In addition, the transceiver module 2101 may be further configured to receive second signaling, where the second signaling is used for activating or deactivating the first forwarding resource set and determining a beam of the at least one forwarding resource, where the beam of the at least one forwarding resource is used for forwarding a signal corresponding to the at least one forwarding resource, and the beam of the at least one forwarding resource includes a relay device backhaul side beam and/or a relay device access side beam.

Optionally, the transceiver module 2101 may be further configured to forward the signal corresponding to the at least one forwarding resource.

Optionally, the processing module 2102 may be configured to determine the beam of the at least one forwarding resource based on the second signaling.

It should be noted that all related content of the steps in the foregoing method embodiments may be cited in function description of corresponding functional modules. Details are not described herein again. The communication apparatus 210 provided in this embodiment may perform the foregoing relay communication method. Therefore, for technical effects that can be achieved by the communication apparatus 210, refer to the foregoing method embodiments. Details are not described herein again.

In this embodiment, the communication apparatus 210 is presented in a form in which functional modules are divided in an integrated manner. The "module" herein may be a processor executing one or more software or firmware programs, a memory, an integrated logic circuit, and/or another device that can provide the foregoing functions. In a simple embodiment, a person skilled in the art can figure out that the communication apparatus 210 may use a form of the communication device 220 shown in FIG. 22.

As shown in FIG. 22, the communication device 220 may include one or more processors 2201, a communication line 2202, and at least one communication interface (in FIG. 22, only an example in which a communication interface 2203 and one processor 2201 are included is used for description), and optionally, may further include a memory 2204.

The processor 2201 may be a general-purpose central processing unit (central processing unit, CPU), a microprocessor, or one or more integrated circuits for controlling program execution of the solutions of this application.

The communication line 2202 may include a path used for communication between different components.

The communication interface 2203 may be a transceiver module configured to communicate with another device or communication network, for example, an Ethernet, a radio access network (radio access network, RAN), or a WLAN. For example, the transceiver module may be an apparatus such as a transceiver or a transceiver machine, and the transceiver may include an antenna. Optionally, the communication interface 2203 may alternatively be a transceiver circuit located inside the processor 2201, and is configured to implement signal input and signal output of the processor.

The memory 2204 may be an apparatus with a storage function. The memory 2204 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic storage medium or another magnetic storage device, or any other medium that can be used to carry or store expected program code in the form of an instruction or a data structure and that can be accessed by a computer. However, this is not limited thereto. The memory may exist independently, and is connected to the processor through the communication line 2202. The memory may alternatively be integrated with the processor.

The memory 2204 is configured to store computer-executable instructions for performing the solutions in this application, and the processor 2201 controls execution. The processor 2201 is configured to execute the computer-executable instructions stored in the memory 2204, to implement the relay communication method provided in embodiments of this application.

Alternatively, optionally, in embodiments of this application, the processor 2201 may perform processing related functions in the relay communication method provided in the following embodiment in this application, and the communication interface 2203 is responsible for communication with another device or a communication network. This is not specifically limited in this embodiment of this application.

Optionally, the computer-executable instructions in this embodiment of this application may also be referred to as application program code. This is not specifically limited in this embodiment of this application.

During a specific implementation, in an optional embodiment, the processor 2201 may include one or more CPUs such as a CPU 0 and a CPU 1 in FIG. 22.

In a specific implementation, in an optional embodiment, the communication device 220 may include a plurality of processors, for example, a processor 2201 and a processor 2207 in FIG. 22. Each of these processors may be a single-core (single-core) processor, or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform an operation or processing.

In a specific implementation, in an optional embodiment, the communication device 220 may further include an output device 2205 and an input device 2206. The output device 2205 communicates with the processor 2201, and may display information in a plurality of manners. The input device 2206 communicates with the processor 2201, and may receive an input by a user in a plurality of manners.

The communication device 220 may also be referred to as a communication apparatus sometimes, and may be a general-purpose device or a dedicated device. A type of the communication device 220 is not limited in embodiments of this application.

The processor 2201 in the communication device 220 shown in FIG. 22 may invoke the computer-executable instructions stored in the memory 2204, so that the communication device 220 performs the relay communication method in the foregoing method embodiment.

Specifically, a function implementation process of the transceiver module 2101 in FIG. 21 may be implemented by using the communication interface 2203 in the communication device 220 shown in FIG. 22. A function implementation process of the processing module 2102 in FIG. 21 may be implemented by using the processor 2201 in the communication device 220 shown in FIG. 22 by invoking the computer-executable instructions stored in the memory 2204.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may understand that units and algorithm steps in the examples described with reference to embodiments disclosed in this specification can be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes outside the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

All or some of the foregoing embodiments may be implemented by using software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on the computer, all or some of the procedures or functions based on embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

Terms such as "component", "module", and "system" used in this application indicate computer-related entities. The computer-related entities may be hardware, firmware, a combination of hardware and software, software, or software in running. For example, a component may be but is not limited to a process that runs on a processor, a processor, an object, an executable file, a thread of execution, a program, and/or a computer. As an example, both an application running on a computing device and the computing device may be components. One or more components may reside within a process and/or a thread of execution, and a component may be located on one computer and/or distributed between two or more computers. In addition, these components may be executed from various computer-readable media that have various data structures. These components may perform communication by using a local and/or remote process and based on, for example, a signal having one or more data packets (for example, data from one component, where the component interacts with another component in a local system or a distributed system, and/or interacts with another system via a network such as the Internet by using a signal).

This application presents aspects, embodiments, or features around a system that may include a plurality of devices, components, modules, or the like. It should be appreciated and understood that, each system may include another device, component, module, and the like, and/or may not include all devices, components, modules, and the like discussed with reference to the accompanying drawings. In addition, a combination of these solutions may be used.

In addition, the term "example" in embodiments of this application is used to represent giving an example, an illustration, or descriptions. Any embodiment or design scheme described as an "example" in this application should not be explained as being more preferred or having more advantages than another embodiment or design scheme. Exactly, the term "example" is used to present a concept in a specific manner.

In embodiments of this application, information (information), signal (signal), message (message), or channel (channel) may be mixed sometimes. It should be noted that meanings expressed by the terms are consistent when differences of the terms are not emphasized. "Of (of)", "corresponding (corresponding, relevant)", and "corresponding (corresponding)" may be mixed sometimes. It should be noted that meanings expressed by the terms are consistent when differences of the terms are not emphasized. Sometimes, "system" and "network" may be mixed sometimes. Meanings expressed by the terms are consistent when differences of the terms are not emphasized. For example, "communication network" also refers to "communication system".

The network architecture and the service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A relay communication method, wherein the method comprises:

receiving, by a relay device, first signaling, wherein the first signaling is used for configuring a first forwarding resource set, and the first forwarding resource set comprises at least one forwarding resource; and
receiving, by the relay device, second signaling, wherein the second signaling is used for activating or deactivating the first forwarding resource set and determining a beam of the at least one forwarding resource, wherein
the beam of the at least one forwarding resource is used for forwarding a signal corresponding to the at least one forwarding resource, and the beam of the at least one forwarding resource comprises a relay device backhaul side beam and/or a relay device access side beam.

2. The method according to claim 1, wherein the first signaling is radio resource control RRC signaling, and the second signaling is a media access control-control element MAC-CE or downlink control information DCI.

3. The method according to claim 1 or 2, wherein the relay device backhaul side beam of the at least one forwarding resource is used by the relay device to receive, from a network device, the signal corresponding to the at least one forwarding resource, and the relay device access side beam of the at least one forwarding resource is used by the relay device to forward, to a terminal device, the signal corresponding to the at least one forwarding resource; or the relay device backhaul side beam of the at least one forwarding resource is used by the relay device to forward, to the network device, the signal corresponding to the at least one forwarding resource; and the relay device access side beam of the at least one forwarding resource is used by the relay device to receive, from the terminal device, the signal corresponding to the at least one forwarding resource.

4. The method according to any one of claims 1 to 3, wherein the first signaling comprises at least one of the following: an index of the first forwarding resource set, an index of a forwarding resource in the first forwarding resource set, time-frequency location information, density information, network device beam information, relay device access side beam information, or relay device backhaul side beam information.

5. The method according to any one of claims 1 to 4, wherein the beam of the at least one forwarding resource further comprises a network device beam, and the first signaling further comprises the network device beam information.

6. The method according to any one of claims 1 to 5, wherein when the beam of the at least one forwarding resource comprises the relay device access side beam, the second signaling comprises a plurality of first indication fields; and an i$^{th}$ first indication field in the plurality of first indication fields indicates a relay device access side beam of an i$^{th}$ forwarding resource in the first forwarding resource set, wherein i is a positive integer.

7. The method according to claim 6, wherein the i$^{th}$ first indication field is used for carrying an index of the relay device access side beam of the i$^{th}$ forwarding resource; and
the second signaling further comprises a first type field corresponding to the i$^{th}$ first indication field, and the first type field indicates that a type of the index carried in the first indication field is a relay device access side beam index.

8. The method according to claim 7, wherein when the beam of the at least one forwarding resource comprises the relay device backhaul side beam, the second signaling further comprises a second indication field corresponding to X first indication fields; the X first indication fields indicate relay device access side beams of X forwarding resources, the second indication field indicates relay device backhaul side beams of the X forwarding resources, and the relay device backhaul side beams of the X forwarding resources are the same.

9. The method according to claim 8, wherein the second indication field is used for carrying indexes of the relay device backhaul side beams of the X forwarding resources; and
the second signaling further comprises a second type field corresponding to the second indication field, and the second type field indicates that a type of the index carried in the second indication field is a relay device backhaul side beam index.

10. The method according to any one of claims 7 to 9, wherein when the beam of the at least one forwarding resource comprises the network device beam, the second signaling further comprises a third indication field corresponding to Y first indication fields, the Y first indication fields indicate relay device access side beams of Y forwarding resources, the third indication field indicates network device beams of the Y forwarding resources, and the network device beams of the Y forwarding resources are the same.

11. The method according to claim 10, wherein the third indication field is used for carrying indexes of the network device beams of the Y forwarding resources; and
the second signaling further comprises a third type field corresponding to the third indication field, and the third type field indicates that a type of the index carried in the third indication field is a network device beam index.

12. The method according to claims 1 to 5, wherein before the receiving, by the relay device, second signaling, the method further comprises:
receiving, by the relay device, third signaling, wherein the third signaling comprises at least one index set, the index set comprises at least one beam index, and the beam index is an index of the relay device access side beam.

13. The method according to claim 12, wherein the second signaling comprises a seventh indication field, and the seventh indication field corresponds to a first index set in the at least one index set; and
the seventh indication field further comprises at least one piece of bit information, and the at least one piece of bit information is used for activating a relay device access side beam corresponding to the first index set.

14. The method according to claim 13, wherein if $k^{th}$ piece of bit information in the at least one piece of bit information is a first value, a relay device access side beam corresponding to a $k^{th}$ beam index in the first index set is activated.

15. The method according to claim 13 or 14, wherein the relay device access side beam activated by using the second signaling sequentially corresponds to the resource in the first forwarding resource set.

16. The method according to any one of claims 1 to 15, wherein the first signaling is further used for configuring a first transmission resource set, and the first transmission resource set comprises at least one transmission resource; the second signaling is further used for activating the first transmission resource set and determining a network device beam of the transmission resource in the first transmission resource set; and the first transmission resource set is used for signal transmission between the network device and the relay device; and
the network device beam of the transmission resource and the network device beam of the forwarding resource are the same, or the network device beam of the transmission resource and the network device beam of the forwarding resource are different.

17. A relay communication method, wherein the method comprises:

sending, by a network device, first signaling, wherein the first signaling is used for configuring a first forwarding resource set, and the first forwarding resource set comprises at least one forwarding resource; and
sending, by the network device, second signaling, wherein the second signaling is used for activating or deactivating the first forwarding resource set and determining a beam of the at least one forwarding resource, wherein
the beam of the at least one forwarding resource is used for forwarding a signal corresponding to the at least one forwarding resource, and the beam of the at least one forwarding resource comprises a relay device backhaul side beam and/or a relay device access side beam.

18. The method according to claim 17, wherein the first signaling is radio resource control RRC signaling, and the second signaling is a media access control-control element MAC-CE or downlink control information DCI.

19. The method according to claim 17 or 18, wherein the relay device backhaul side beam of the at least one forwarding resource is used by a relay device to receive, from the network device, the signal corresponding to the at least one forwarding resource, and the relay device access side beam of the at least one forwarding resource is used by the relay device to forward, to a terminal device, the signal corresponding to the at least one forwarding resource; or
the relay device backhaul side beam of the at least one forwarding resource is used by the relay device to forward, to the network device, the signal corresponding to the at least one forwarding resource; and the relay device access side beam of the at least one forwarding resource is used by the relay device to receive, from the terminal device, the signal corresponding to the at least one forwarding resource.

20. The method according to any one of claims 17 to 19, wherein the first signaling comprises at least one of the following: an index of the first forwarding resource set, an index of a forwarding resource in the forwarding resource set, time-frequency location information, density information, network device beam information, relay device access side beam information, or relay device backhaul side beam information.

21. The method according to any one of claims 17 to 20, wherein the beam of the at least one forwarding resource further comprises a network device beam, and the first signaling further comprises the network device beam information.

22. The method according to any one of claims 17 to 21, wherein when the beam of the at least one forwarding resource comprises the relay device access side beam, the second signaling comprises a plurality of first indication fields; and

an i<sup>th</sup> first indication field in the plurality of first indication fields indicates a relay device access side beam of an i<sup>th</sup> forwarding resource in the first forwarding resource set, wherein i is a positive integer.

23. The method according to claim 22, wherein the i<sup>th</sup> first indication field is used for carrying an index of the relay device access side beam of the i<sup>th</sup> forwarding resource; and
the second signaling further comprises a first type field corresponding to the i<sup>th</sup> first indication field, and the first type field indicates that a type of the index carried in the first indication field is a relay device access side beam index.

24. The method according to claim 23, wherein when the beam of the at least one forwarding resource comprises the relay device backhaul side beam, the second signaling further comprises a second indication field corresponding to X first indication fields; the X first indication fields indicate relay device access side beams of X forwarding resources, the second indication field indicates relay device backhaul side beams of the X forwarding resources, and the relay device backhaul side beams of the X forwarding resources are the same.

25. The method according to claim 24, wherein the second indication field is used for carrying indexes of the relay device backhaul side beams of the X forwarding resources; and
the second signaling further comprises a second type field corresponding to the second indication field, and the second type field indicates that a type of the index carried in the second indication field is a relay device backhaul side beam index.

26. The method according to any one of claims 23 to 25, wherein when the beam of the at least one forwarding resource comprises the network device beam, the second signaling further comprises a third indication field corresponding to Y first indication fields, the Y first indication fields indicate relay device access side beams of Y forwarding resources, the third indication field indicates network device beams of the Y forwarding resources, and the network device beams of the Y forwarding resources are the same.

27. The method according to claim 26, wherein the third indication field is used for carrying indexes of the network device beams of the Y forwarding resources; and
the second signaling further comprises a third type field corresponding to the third indication field, and the third type field indicates that a type of the index carried in the third indication field is a network device beam index.

28. The method according to claims 17 to 21, wherein before the sending, by the network device, second signaling, the method further comprises:
sending, by the network device, third signaling, wherein the third signaling comprises at least one index set, the index set comprises at least one beam index, and the beam index is an index of the relay device access side beam.

29. The method according to claim 28, wherein the second signaling comprises a seventh indication field, and the seventh indication field corresponds to a first index set in the at least one index set; and
the seventh indication field further comprises at least one piece of bit information, and the at least one piece of bit information is used for activating a relay device access side beam corresponding to the first index set.

30. The method according to claim 29, wherein if k<sup>th</sup> piece of bit information in the at least one piece of bit information is a first value, a relay device access side beam corresponding to a k<sup>th</sup> beam index in the first index set is activated.

31. The method according to claim 29 or 30, wherein the relay device access side beam activated by using the second signaling sequentially corresponds to the resource in the first forwarding resource set.

32. The method according to any one of claims 17 to 31, wherein the first signaling is further used for configuring a first transmission resource set, and the first transmission resource set comprises at least one transmission resource; the second signaling is further used for activating the first transmission resource set and determining a network device beam of the transmission resource in the first transmission resource set; and the first transmission resource set is used for signal transmission between the network device and the relay device; and
the network device beam of the transmission resource and the network device beam of the forwarding resource are the same, or the network device beam of the transmission resource and the network device beam of the forwarding resource are different.

33. A communication apparatus, wherein the communication apparatus comprises a processor and a memory, wherein the memory is configured to store computer-executable instructions; and when the processor executes the computer-executable instructions, the communication apparatus is enabled to perform the method according to any one of claims 1 to 16 or 17 to 32.

34. A computer-readable storage medium, wherein the computer-readable storage medium stores a computer program, and when the computer program is executed by a computer, the computer is enabled to perform the method according to any one of claims 1 to 16 or 17 to 32.

FIG. 1

FIG. 2

Backhaul side · Access side

Network device 301 · Relay device 302 · Terminal device 303

FIG. 3

Beam

a2 · a1 · a3 · b2 · b1 · b3 · c2 · c1 · c3 · d2 · d1 · d3

Backhaul side · Access side

Network device 401 · Relay device 402 · Terminal device 403

FIG. 4

Communication apparatus 50

Signal transceiver unit 503

Processor 501

Transmitter
5031

Memory 502

Computer program
or configuration
information

Receiver
5032

Antenna
5033

FIG. 5

Signal transceiver unit 604

Signal transceiver unit 603

Transmitter
6041

Controller 601

Transmitter
6031

Signal amplifier 602

Receiver
6042

Receiver
6032

Antenna
6043

Antenna
6033

FIG. 6

EP 4 564 970 A1

| Network device | | Relay device |
|---|---|---|
| 701: First signaling, used for configuring a first forwarding resource set | | |
| 702: Second signaling, used for activating the first forwarding resource set and | | |
| determining a beam of at least one forwarding resource | | |

FIG. 7

| First indication field | First |
|---|---|
| ... | ... |
| First indication field | $M^{th}$ |

FIG. 8

| Second indication field | |
|---|---|
| First indication field | First |
| ... | ... |
| First indication field | $M^{th}$ |

FIG. 9

| | |
|---|---|
| First { | Second indication field |
| | First indication field |

First

...  ...

| | |
|---|---|
| | First indication field |
| Second { | Second indication field |
| | First indication field |

$N^{th}$

$(N+1)^{th}$

...  ...

| |
|---|
| First indication field |

$M^{th}$

FIG. 10

| |
|---|
| Third indication field |
| First indication field |

First

...  ...

| |
|---|
| First indication field |

$M^{th}$

FIG. 11

| | |
|---|---|
| First { | Third indication field |
| | First indication field |

First

...  ...

| | |
|---|---|
| | First indication field |
| Second { | Third indication field |
| | First indication field |

$N^{th}$

$(N+1)^{th}$

...  ...

| |
|---|
| First indication field |

$M^{th}$

FIG. 12

| | | | | |
|---|---|---|---|---|
| D | Passband ID | | | $1^{st}$ byte |
| R | R | Forwarding resource set ID | | $2^{nd}$ byte |
| E | TCI state ID_1 | | | $3^{rd}$ byte |
| F | R | R | Access side beam index_1 | $4^{th}$ byte |

...        ...

| | | | | |
|---|---|---|---|---|
| F | R | R | Access side beam index_M | $(M+3)^{th}$ byte |

FIG. 13

| | | | |
|---|---|---|---|
| D | Passband ID | | $1^{st}$ byte |
| R | R | Forwarding resource set ID | $2^{nd}$ byte |
| E | TCI state ID_1 | | $3^{rd}$ byte |
| F | Backhaul side beam index_1 | Access side beam index_1 | $4^{th}$ byte |

...        ...

| | | | | |
|---|---|---|---|---|
| F | R | R | Access side beam index_M | $(M+3)^{th}$ byte |

FIG. 14a

| D | Passband ID | | | 1st byte |
|---|---|---|---|---|
| R | R | Forwarding resource set ID | | 2nd byte |
| E | TCI state ID_1 | | | 3rd byte |
| F | Backhaul side beam index_1 | Access side beam index_1 | | 4th byte |
| F | | Access side beam index_2 | | 5th byte |
| ... | | | | ... |
| F | R | R | Access side beam index_M | (M+3)th byte |

FIG. 14b

| D | Passband ID | | | 1st byte |
|---|---|---|---|---|
| R | R | Forwarding resource set ID | | 2nd byte |
| E | TCI state ID_1 | | | 3rd byte |
| F | R | R | Access side beam index_1 | 4th byte |
| ... | | | | ... |
| F | R | R | Access side beam index_N | (N+3)th byte |
| E | TCI state ID_2 | | | (N+4)th byte |
| F | R | R | Access side beam index_N+1 | (N+5)th byte |
| ... | | | | ... |
| F | R | R | Access side beam index_M | (M+4)th byte |

FIG. 15

| D | | Passband ID | | 1<sup>st</sup> byte |

| | | | | |
|---|---|---|---|---|
| D | | Passband ID | | $1^{st}$ byte |
| R | R | Forwarding resource set ID | | $2^{nd}$ byte |
| E | | TCI state ID_1 | | $3^{rd}$ byte |
| F | Backhaul side beam index_1 | Access side beam index_1 | | $4^{th}$ byte |

...          ...

| | | | | |
|---|---|---|---|---|
| F | R | R | Access side beam index_N | $(N+3)^{th}$ byte |
| E | | TCI state ID_2 | | $(N+4)^{th}$ byte |
| F | Backhaul side beam index_2 | Access side beam index_N+1 | | $(N+5)^{th}$ byte |

...          ...

| | | | | |
|---|---|---|---|---|
| F | R | R | Access side beam index_M | $(M+4)^{th}$ byte |

FIG. 16a

| D | Passband ID | | 1st byte |
|---|---|---|---|
| R | R | Forwarding resource set ID | 2nd byte |
| E | TCI state ID_1 | | 3rd byte |
| F | Backhaul side beam index_1 | Access side beam index_1 | 4th byte |
| F | | Access side beam index_2 | 5th byte |

... ...

| F | R | R | Access side beam index_N | (N+3)th byte |
|---|---|---|---|---|
| E | TCI state ID_2 | | | (N+4)th byte |
| F | Backhaul side beam index_2 | | Access side beam index_N+1 | (N+5)th byte |
| F | | | Access side beam index_N+2 | (N+6)th byte |

... ...

| F | R | R | Access side beam index_M | (M+4)th byte |
|---|---|---|---|---|

FIG. 16b

| T8 | T7 | T6 | T5 | T4 | T3 | T2 | T1 |
|----|----|----|----|----|----|----|----|
| T9 | T10 | T11 | T12 | T13 | T14 | T15 | T16 |

FIG. 17

| D | Passband ID | | | | | | | 1st byte |
|---|---|---|---|---|---|---|---|---|
| Y | R | Forwarding resource set ID | | | | | | 2nd byte |
| Set ID_1 | TCI state ID_1 | | | | | | | 3rd byte |
| T8 | T7 | T6 | T5 | T4 | T3 | T2 | T1 | 4th byte |
| T9 | T10 | T11 | T12 | T13 | T14 | T15 | T16 | 5th byte |
| Set ID_2 | TCI state ID_2 | | | | | | | 6th byte |
| T8 | T7 | T6 | T5 | T4 | T3 | T2 | T1 | 7th byte |
| T9 | T10 | T11 | T12 | T13 | T14 | T15 | T16 | 8th byte |

FIG. 18

| D | Passband ID | | | | | | | 1st byte |
|---|---|---|---|---|---|---|---|---|
| R | R | Forwarding resource set ID | | | | | | 2nd byte |
| Set ID_1 | Backhaul side beam index_1 | TCI state ID_1 | | | | | | 3rd byte |
| T8 | T7 | T6 | T5 | T4 | T3 | T2 | T1 | 4th byte |
| T9 | T10 | T11 | T12 | T13 | T14 | T15 | T16 | 5th byte |
| Set ID_2 | Backhaul side beam index_2 | TCI state ID_2 | | | | | | 6th byte |
| T8 | T7 | T6 | T5 | T4 | T3 | T2 | T1 | 7th byte |
| T9 | T10 | T11 | T12 | T13 | T14 | T15 | T16 | 8th byte |

FIG. 19

| D | | | Passband ID | | 1st byte |
|---|---|---|---|---|---|
| R | R | | Forwarding resource set ID | | 2nd byte |
| E | | | TCI state ID_1 | | 3rd byte |
| F | R | R | Access side beam index_1 | | 4th byte |
| ... | | | | | ... |
| F | R | R | Access side beam index_M | | (M+3)th byte |
| F | | | TCI state ID_2 | | (M+4)th byte |

FIG. 20

Communication apparatus 210

Transceiver module 2101

Processing module 2102

FIG. 21

220

Processor 2201

CPU 0

CPU 1

Processor 2207

CPU 0

CPU 1

2202

Memory 2204

Communication interface 2203

Output device 2205

Input device 2206

FIG. 22

## INTERNATIONAL SEARCH REPORT

| International application No. |
| --- |
| **PCT/CN2023/112726** |

**A. CLASSIFICATION OF SUBJECT MATTER**

H04W 72/04(2023.01)i; H04L5/00(2006.01)i

According to International Patent Classification (IPC) or to both national classification and IPC

**B. FIELDS SEARCHED**

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNTXT, VEN, WPABS, ENTXT, CNKI: 中继, 接收, 发送, 指示, 激活, 触发, 波束, 资源, 回程, 回传, RRC, MAC-CE, DCI, relay, receive, transmit, indicate, activate, trigger, beam, resource, backhaul

**C. DOCUMENTS CONSIDERED TO BE RELEVANT**

| Category* | Citation of document, with indication, where appropriate, of the relevant passages | Relevant to claim No. |
| --- | --- | --- |
| X | CN 114270910 A (BEIJING XIAOMI MOBILE SOFTWARE CO., LTD.) 01 April 2022 (2022-04-01)<br>description, paragraphs 0002 and 0145-0385, and figures 1-13 | 1-34 |
| X | CN 114731572 A (BEIJING XIAOMI MOBILE SOFTWARE CO., LTD.) 08 July 2022 (2022-07-08)<br>description, paragraphs 0055-0233, and figures 1-13 | 1-34 |
| A | CN 110138526 A (CHENGDU HUAWEI TECHNOLOGIES CO., LTD.) 16 August 2019 (2019-08-16)<br>entire document | 1-34 |
| A | CN 110418412 A (HUAWEI TECHNOLOGIES CO., LTD.) 05 November 2019 (2019-11-05)<br>entire document | 1-34 |
| A | US 2020366363 A1 (QUALCOMM INC.) 19 November 2020 (2020-11-19)<br>entire document | 1-34 |
| A | US 2022225308 A1 (QUALCOMM INC.) 14 July 2022 (2022-07-14)<br>entire document | 1-34 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **11 November 2023** | **17 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/112726**

| Patent document cited in search report | | | Publication date (day/month/year) | Patent family member(s) | | | Publication date (day/month/year) |
|---|---|---|---|---|---|---|---|
| CN | 114270910 | A | 01 April 2022 | WO | 2023092468 | A1 | 01 June 2023 |
| CN | 114731572 | A | 08 July 2022 | | None | | |
| CN | 110138526 | A | 16 August 2019 | US | 2020358579 | A1 | 12 November 2020 |
| | | | | EP | 3726766 | A1 | 21 October 2020 |
| | | | | EP | 3726766 | A4 | 24 February 2021 |
| | | | | BR | 112020015952 | A2 | 15 December 2020 |
| | | | | WO | 2019154193 | A1 | 15 August 2019 |
| CN | 110418412 | A | 05 November 2019 | WO | 2019206168 | A1 | 31 October 2019 |
| US | 2020366363 | A1 | 19 November 2020 | US | 11528075 | B2 | 13 December 2022 |
| | | | | TW | 202102023 | A | 01 January 2021 |
| | | | | WO | 2020232098 | A1 | 19 November 2020 |
| US | 2022225308 | A1 | 14 July 2022 | US | 11751197 | B2 | 05 September 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210972012